(19) Europäisches Patentamt
European Patent Office
Office européen des brevets

(11) **EP 4 345 071 A1**

(12) **EUROPÄISCHE PATENTANMELDUNG**

(43) Veröffentlichungstag:
**03.04.2024 Patentblatt 2024/14**

(21) Anmeldenummer: 23199993.9

(22) Anmeldetag: **27.09.2023**

(51) Internationale Patentklassifikation (IPC):
*C03B 18/02* (2006.01)    *C03C 3/091* (2006.01)

(52) Gemeinsame Patentklassifikation (CPC):
**C03B 18/02; C03C 3/091**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **28.09.2022 DE 102022125049
10.11.2022 DE 102022129719**

(71) Anmelder: **SCHOTT Technical Glass Solutions GmbH
07745 Jena (DE)**

(72) Erfinder:
• **BRANDT-SLOWIK, Juliane
07745 Jena (DE)**

• **SCHMIADY, Thomas
07745 Jena (DE)**
• **EBERL, Stefan
07745 Jena (DE)**
• **SPRENGER, Andreas
07745 Jena (DE)**
• **VOGL, Armin
07745 Jena (DE)**
• **MEISTER, Michael
55122 Mainz (DE)**
• **SCHRÖDER, Tommy
07745 Jena (DE)**
• **REINL, Michael
07745 Jena (DE)**

(74) Vertreter: **Schott Corporate IP
Hattenbergstraße 10
55122 Mainz (DE)**

(54) **GLASSCHEIBE MIT GERINGEN OPTISCHEN FEHLERN, INSBESONDERE GERINGEN OBERFLÄCHENNAHEN BRECHKRÄFTEN, VERFAHREN ZU DEREN HERSTELLUNG SOWIE DEREN VERWENDUNG**

(57)    Die Erfindung betrifft eine Glasscheibe, insbesondere aus einem mittels Heißformung geformten, vorzugsweise gefloatetem Glasband durch Vereinzelung erhaltene Glasscheibe, insbesondere umfassend ein Borosilikatglas, mit einer Dicke D zwischen mindestens 1,75 mm und höchstens 7 mm, umfassend eine Oberseite und eine Unterseite, gekennzeichnet durch einen Betrag der Summe der Brechkräfte der Oberseite und der Unterseite innerhalb einer quadratischen Fläche Mb von 500 mm mal 500 mm für senkrecht auf die Glasscheibe auftreffendes Licht für ein 99,9% Quantil von 0 mdpt bis weniger als 1,7 mdpt in zumindest einer Richtung parallel zu der Oberfläche der Glasscheibe, Verfahren zu deren Herstellung sowie deren Verwendungen.

(Erfindungsgemäß)
Fig. 7 b

**Beschreibung**

Gebiet der Erfindung

Die vorliegende Anmeldung betrifft eine Glasscheibe, vorzugsweise eine Glasscheibe mit geringen optischen Fehlern, insbesondere geringen oberflächennahen Brechkräften, ein Verfahren zu deren Herstellung sowie deren Verwendung.

Hintergrund der Erfindung

Glasscheiben können in vielfältigen Anwendungen zum Einsatz kommen, beispielsweise in Fahrzeugscheiben, in Architekturanwendungen oder als Abdeckungen für elektronische Geräte (sogenannte Displayscheiben).

Beispielsweise beschreibt die deutsche Patentanmeldung DE 10 2007 025 687 B3 die Verwendung einer Glasscheibe aus Borosilikatglas in einer Flachglasanzeigevorrichtung sowie eine solcherart ausgerüstete Flachglasanzeigevorrichtung.

Die internationale Patentanmeldung WO 2018/114956 A1 beschreibt ein Dünnglassubstrat sowie ein Verfahren und eine Vorrichtung zu dessen Herstellung. Im Verfahren zur Herstellung des Dünnglassubstrats wird die Viskosität des Glases gezielt eingestellt. Auch die internationale Patentanmeldung WO 2019/076492 A1 beschreibt ein Dünnglassubstrat, insbesondere ein Borosilikatglas-Dünnglassubstrat sowie ein Verfahren und eine Vorrichtung zu dessen Herstellung, wobei auch hier die Viskosität des Glases im Herstellungsverfahren gezielt eingestellt wird. Beide Anmeldungen offenbaren Verfahren zur Verminderung von beim Heißformen in Ziehrichtung entstehenden länglichen Ziehstreifen und geben Messwerte quer zu dieser Ziehrichtung an.

Schließlich beschreibt die deutsche Offenlegungsschrift DE 10 2020 104 973 A1 ein Glassubstrat für eine Fahrzeugscheibe, insbesondere für die Frontscheibe eines Fahrzeugs. Hierzu wird die Alterungsgeschwindigkeit des Glases gezielt eingestellt.

Glasscheiben des Standes der Technik weisen jedoch noch immer recht ausgeprägte, insbesondere linsenartige optische Fehler auf, welche beispielsweise durch oberflächennahe Brechkräfte bedingt sein können, welche in Ziehrichtung auftreten und bisher durch den Stand der Technik nicht erfasst wurden. Dies kann jedoch gerade für die Anwendung solcher Scheiben in Displayeinrichtungen ungünstig sein.

Es besteht daher ein Bedarf an Verfahren zur Herstellung von Glasscheiben, mit welchen optische Fehler, wie beispielsweise oberflächennahe Brechkräfte weiterhin vermindert werden können, sowie an Glasscheiben mit vorzugsweise geringen optischen Fehlern, insbesondere geringen oberflächennahen Brechkräften, welche in Ziehrichtung entstehen. Als Ziehrichtung wird hierbei diejenige Richtung verstanden, in welcher das heißzuformende Glas bei seiner Heißformung am stärksten gestreckt wird.

Aufgabe der Erfindung

Eine Aufgabe der Erfindung besteht in der Bereitstellung einer Glasscheibe, welche die vorstehend beschriebenen Nachteile des Standes der Technik zumindest teilweise mindert. Ein weiterer Aspekt besteht in der Bereitstellung eines Verfahrens zur Herstellung solcher Glasscheiben sowie die Verwendung dieser Glasscheiben.

Zusammenfassung der Erfindung

Die Aufgabe der Erfindung wird gelöst durch den Gegenstand der unabhängigen Ansprüche. Bevorzugte und spezielle Ausführungsformen finden sich in den abhängigen Ansprüchen, der Beschreibung und den Zeichnungen der vorliegenden Offenbarung.

Bei einer Glasscheibe, insbesondere wie diese im Rahmen der vorliegenden Offenbarung betrachtet wird, somit bei einer durch ein Heißformungsverfahren erhaltenen Glasscheibe mit im Wesentlichen parallelen Hauptoberflächen, kann eine Ablenkung des Strahlengangs von durch diese tretendem Licht entstehen, durch welche zumindest ein Teil dieses Lichtes seine Ausbreitungsrichtung ändert. Diese Ablenkung kann durch Abweichungen der Oberfläche der Glasscheibe von einer ideal planen Oberfläche entstehen, wodurch dann nicht wie im Idealfall nur ein lediglich paralleler Versatz des Strahlengangs dieses Lichtes senkrecht zu seiner Ausbreitungsrichtung entsteht, beispielsweise bei einem relativ zu der Glasscheibe geneigten Durchtritt des Lichts durch die Glasscheibe, sondern es können verschiedene Arten der Ablenkung des Strahlengangs auftreten.

Weist die Glasscheibe sich räumlich zumindest in einer Richtung erstreckende Erhebungen auf, können hierdurch linsenartige Brechkräfte entstehen, welche bei einer Betrachtung durch die Glasscheibe das Bild von hinter der Glasscheibe liegenden Gegenständen verändern, insbesondere verzerren können. Diese bildverändernden Störungen des Strahlengangs werden vorliegend auch als optische Störungen bezeichnet und können als Brechkräfte der Oberfläche der Glasscheibe erfasst werden. Besonders störend können derartige Verzerrungen beispielsweise bei der Betrachtung einer Display- oder Anzeigevorrichtung sein, welche eine Glasscheibe beispielsweise als Abdeckscheibe verwendet.

Durch einen Aspekt der vorliegenden Erfindung sollen insbesondere diese bildverändernden Strukturen auf zumindest einer der Oberflächen der Glasscheibe, bevorzugt jedoch sowohl auf der Oberfläche der Oberseite der Glasscheibe als auch auf der Oberfläche der Unterseite der Glasscheibe gemildert werden.

Mit der Erfindung ist es auf überraschend wirksame Weise gelungen, optische Fehler direkt schon während der Heißformung einer Glasscheibe zu vermindern, ohne dass es hierbei einer nachträglichen Oberflächenbearbeitung der Glasscheibe bedurfte. Somit beziehen sich die in vorliegend 3 angegebenen Daten auf heißgeformte Glasscheiben nach deren Vereinzelung, welche jedoch weder während der Heißformung noch nach der Heißformung zusätzlich zur Heißformung einer Oberflächenbearbeitung unterzogen wurden. Der Begriff der Oberflächenbearbeitung umfasst dabei sowohl eine mechanische, chemische als auch thermische Behandlung der Oberfläche, welche insbesondere geeignet ist, die Oberfläche zu glätten oder Erhebungen sowie Vertiefungen auf dieser zu mindern sowie Verfahren zur Erzeugung von Druck- und/oder Zugspannungen, welche geeignet sind, die Festigkeit der bearbeiteten Oberfläche zu erhöhen, wie beispielsweise thermisches oder chemisches Vorspannen.

Optische Brechkräfte weisen strahl- oder wellenfrontformende Eigenschaften auf, welche zu optischen Fehlern führen können und vorliegend auch als oberflächennahe Brechkräfte betrachtet werden, Der Begriff der oberflächennahen Brechkräfte bezeichnet somit durch die Form der Oberfläche erzeugte Brechkräfte, jedoch keine Brechungsindexänderungen, welche ebenfalls innerhalb einer Glasscheibe, beispielsweise durch Inhomogenitäten der Zusammensetzung des jeweiligen Glases der Glasscheibe verursacht sein können. Derartige oberflächennahen Brechkräfte können die Verwendbarkeit einer Glasscheibe für definierte Anwendungen, wie beispielsweise für hochauflösende Anzeigeeinrichtungen schädigen oder sogar deren Auflösungsvermögen vermindern. Soweit im Rahmen der weiteren Offenbarung abkürzend lediglich der Begriff der Brechkräfte verwendet wird, werden hierbei jedoch mit diesem Begriff ebenfalls jeweils oberflächennahe Brechkräfte bezeichnet. Bei den vorliegend offenbarten Glasscheiben waren jedoch die durch Inhomogenitäten und Verwölbungen, insbesondere auch keilförmige Verwölbungen des Glases der jeweiligen Glasscheibe bewirkten Brechkräfte so gering, dass diese praktisch keine Auswirkung auf die tatsächlich gemessenen oberflächennahen Brechkräfte hatten.

Derartige oberflächennahe Brechkräfte können beispielsweise durch rein optische Messungen erfasst werden. Branchenüblich wurde hierzu das Mess-System ISRA VISION LABSCAN-SCREEN 2D in dessen Messanordnung "horizontale Distorsion" verwendet.

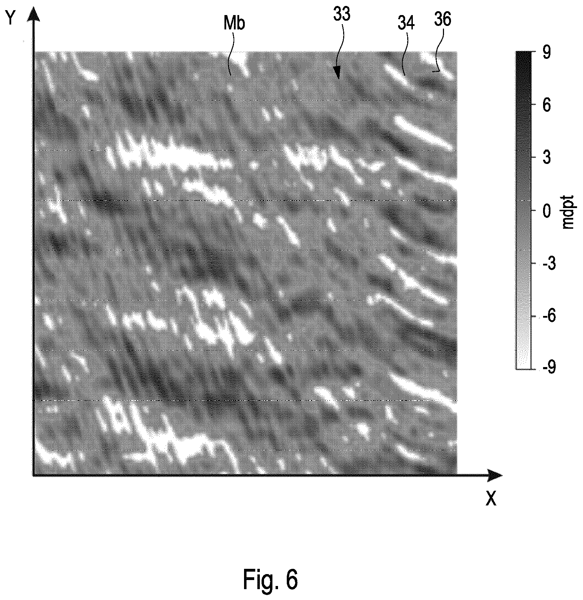

Diese Messung umfasste jeweils zeilenweise parallel zu der bei der Heißformung verwendeten Ziehrichtung erfasste Daten, wobei sich die jeweilige Messzeile parallel zur Ziehrichtung erstreckte. Soweit die Messung der oberflächennahen Brechkräfte unter einem Verkippungswinkel vorgenommen wurde, sind die hierbei erfassten Messwerte für eine senkrechte Richtung des einfallenden Lichtes umgerechnet und entsprechend auch für diese senkrechte Richtung des einfallenden Lichtes angegeben worden Hierbei wurde das Filter 4/5/0 (Winkel / Brechkraft / Differenzierungslänge/) für die gemessenen Daten verwendet, wobei jeweils beide Oberflächen der Glasscheibe, somit die Summe der Brechkräfte der Oberseite und der Unterseite bei einem Verkippungswinkel von 55° erfasst wurden. Eine Darstellung der hierbei erhaltenen Messwerte ist beispielsweise den Figuren 6, 7a und 7b sowie der Figur 8 zu entnehmen.

Die vorliegende Erfindung betrifft eine Glasscheibe, insbesondere eine Glasscheibe umfassend ein Borosilikatglas oder aus einem Borosilikatglas, mit einer Dicke zwischen mindestens 1,75 mm und höchstens 7 mm. Die Glasscheibe umfasst eine Oberseite und eine Unterseite, welche jeweils eine Oberfläche der Glasscheibe definieren, wobei sich diese Oberflächen im Wesentlichen parallel zueinander erstrecken.

Gemäß einem Aspekt der Erfindung wird eine Glasscheibe, insbesondere aus einem mittels Heißformung geformten, vorzugsweise gefloateten Glasband durch Vereinzelung erhaltene Glasscheibe, bereitgestellt, insbesondere umfassend ein Borosilikatglas, mit einer Dicke D zwischen mindestens 1,75 mm und höchstens 7 mm, umfassend eine Oberseite und eine Unterseite, gekennzeichnet durch einen Betrag der Summe der Brechkräfte der Oberseite und der Unterseite innerhalb einer quadratischen Fläche Mb von 500 mm mal 500 mm für senkrecht auf die Glasscheibe auftreffendes Licht für ein 99,9% Quantil von 0 mdpt bis 1,7 mdpt in zumindest einer Richtung parallel zu der Oberfläche der Glasscheibe.

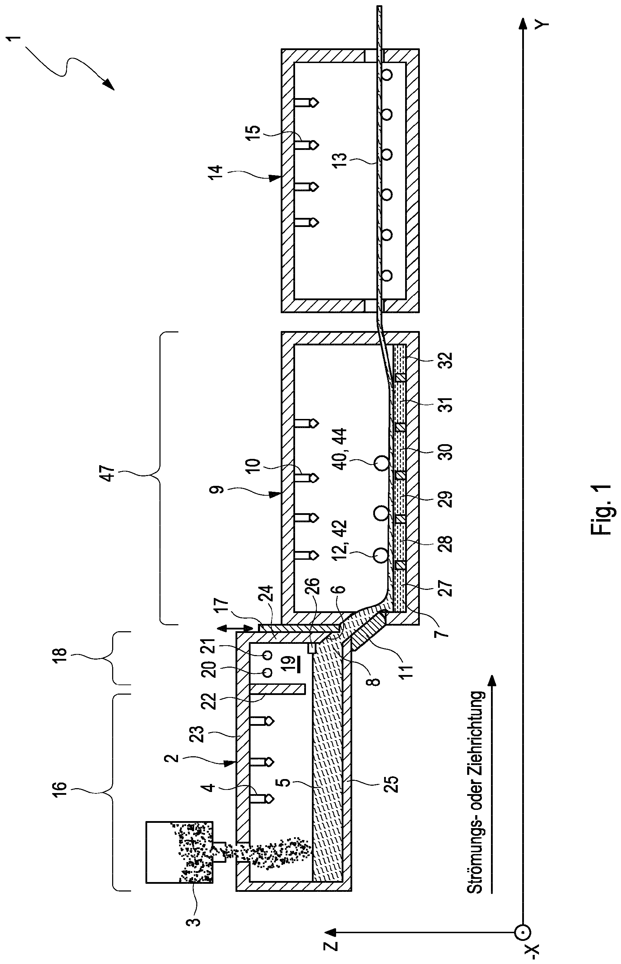

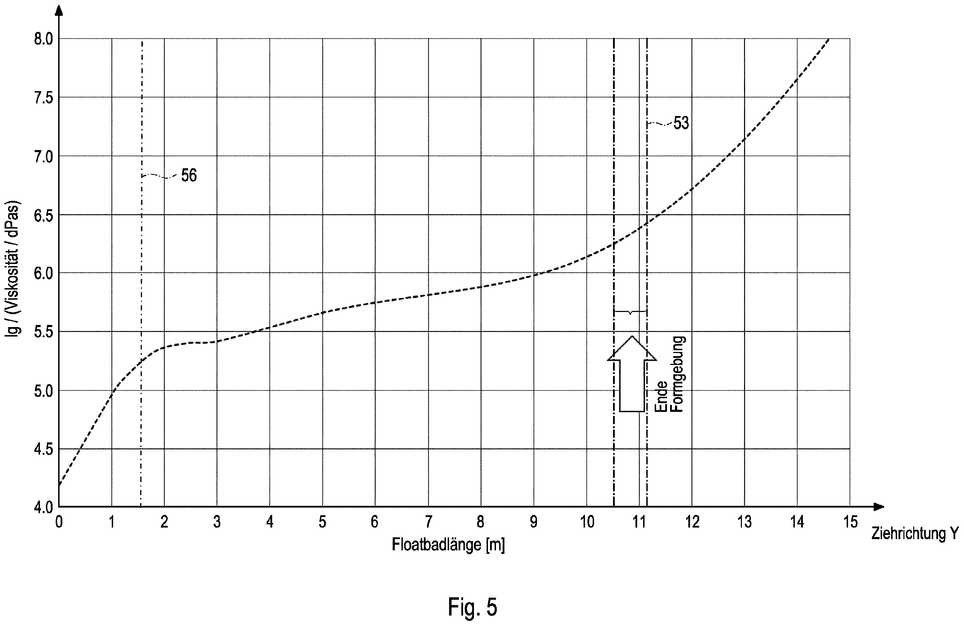

Die vorstehen erwähnte zumindest eine Richtung entsprach jeweils der Y-Richtung des in den Figuren 1 bis 4 dargestellten kartesischen Koordinatensystems und verlief somit parallel zu der bei der Heißformung verwendeten Ziehrichtung Y, in welcher jeweils auch die Entfernung von einem Bauteil zur Durchsatzregulierung, dem Tweel oder Regelschieber angegeben ist, wobei die dem Floatbad zugewandte Seite des Tweels oder Regelschiebers wie in Figur 5 dargestellt bei einem Ort in Ziehrichtung Y bei einer Entfernung von null m liegt und somit den Ausgangspunkt für Entfernungsangaben, welche jeweils für die Mitte Mi des Floatbads bezüglich der X-Richtung angegeben sind, darstellt.

Diese zumindest eine Richtung kann auf der Glasscheibe oder einer Verpackung der Glasscheibe angegeben werden, um eine möglichst einfache weitere Verarbeitung der Glasscheibe sicherzustellen. Alternativ kann diese zumindest eine Richtung auch unabhängig von jeglicher Angabe der zumindest einen Richtung, insbesondere unabhängig von der Angabe "Ziehrichtung" durch Messung der jeweiligen Richtung mit den geringsten oberflächennahen Brechkräften ermittelt werden.

Mit anderen Worten wird nach der vorliegenden Offenbarung also eine Glasscheibe bereitgestellt, welche besonders geringe optische Fehler, die insbesondere durch oberflächennahe optische Brechkräfte verursacht sein können, aufweist.

Dies war bisher so nicht bekannt. Die geringen oberflächennahen Brechkräfte einer Glasscheibe nach der vorliegenden Anmeldung sind allerdings gerade besonders vorteilhaft für Anwendungen der Glasscheibe beispielsweise in elektronischen Geräten und Displays, wo sie als Abdeckscheibe verwendet werden kann. Auch für Verwendungen als Verglasungen, insbesondere als Architekturverglasungen eignen sich die erfindungsgemäßen Glasscheiben in vorteilhafter Weise.

Vorteilhaft ist es weiterhin, insbesondere hinsichtlich der Kratzfestigkeit und der chemischen Beständigkeit der Glasscheibe, wenn diese ein Borosilikatglas umfassend die folgenden Komponenten in Gew.-% umfasst:

| | |
|---|---|
| $SiO_2$ | 70 bis 87, bevorzugt 75 bis 85 |
| $B_2O_3$ | 5 bis 25, bevorzugt 7 bis 14 |
| $Al_2O_3$ | 0 bis 5, bevorzugt 1 bis 4 |
| $Na_2O$ | 0,5 bis 9, bevorzugt 0,5 bis 6,5 |
| $K_2O$ | 0 bis 3, bevorzugt 0,3 bis 2,0 |

| | |
|---|---|
| CaO | 0 bis 3 |
| MgO | 0 bis 2 |

Mit einem solchen Borosilikatglas werden besonders gute Kratzfestigkeit und chemische Beständigkeiten realisiert. Auch ist es auf diese Weise möglich, Gläser mit einem nur geringen thermischen Ausdehnungskoeffizienten zu erhalten. Der lineare thermische Ausdehnungskoeffizient im Bereich zwischen 20°C und 300°C beträgt vorzugsweise weniger als $5 * 10^{-6}$/K, bevorzugt jedoch mindestens $3,0 * 10^{-6}$/K.

Besonders bevorzugt ist die Glasscheibe nach einer Ausführungsform als Floatglasscheibe ausgebildet. Auf diese Weise können geringe oberflächennahe Brechkräfte wenigstens einer Oberfläche einer Seite der Glasscheibe bereitgestellt werden, wohingegen vorliegend hierüber hinausgehend jeweils die Summe der Brechkräfte beider sich im Wesentlichen parallel zueinander erstreckenden Oberflächen einer Glasscheibe angegeben werden.

Entsprechend wurden die Brechkräfte auf der Oberfläche der Oberseite und der Oberfläche der Unterseite der Glasscheibe gemessen, somit auf der Oberfläche der in einem Floatverfahren während der Heißformung dem Zinnbad abgewandten Seite und der Oberfläche der dem Zinnbad zugewandten Seite der Glasscheibe gemessen.

Vorteilhaft kann eine solche Glasscheibe hergestellt werden in einem Verfahren nach einem weiteren Aspekt der vorliegenden Offenbarung. Die vorliegende Offenbarung betrifft daher auch ein Verfahren zur Herstellung einer Glasscheibe, insbesondere ein Verfahren zur kontinuierlichen Herstellung einer Glasscheibe, insbesondere einer Glasscheibe nach einer Ausführungsform, umfassend die Schritte

- Bereitstellen eines Gemenges umfassend Glasrohstoffe,
- Schmelzen des Gemenges unter Erhalt einer Glasschmelze,
- Einstellen der Viskosität der Glasschmelze,
- Überführen der Glasschmelze in eine Vorrichtung zum Heißformen, insbesondere mittels Floaten unter Bildung eines Glasbandes,
- Vereinzeln des heißgeformten Glasbandes unter Erhalt einer Glasscheibe,

wobei die Viskosität in der Vorrichtung zum Heißformen so eingestellt ist, dass die Summe der dekadischen Logarithmen bei der Entfernung von einem Bauteil zur Durchsatzregulierung, an welcher das Glas nach seinem Auftreffen auf das Floatbad seine maximale Breite erlangt hat lg ($\eta_A$ /dPa*s) und am Ende des Heißformens lg ($\eta_E$ /dPa*s) zwischen mindestens 11,4 und höchstens 11,8 liegt.

Mit anderen Worten umfasst das Verfahren nach der vorliegenden Offenbarung einen Schritt, bei welchem die Viskosität der Glasschmelze so eingestellt ist, dass eine bestimmte Mindestviskosität des Glases keinesfalls unterschritten wird. Im Gegenteil wird die Viskosität gezielt eingestellt, beispielsweise indem das Glas vor dem Überführen in die Vorrichtung zum Heißformen gezielt gekühlt wird. Jedoch erfolgt die gezielte Einstellung einer recht hohen Viskosität nicht lediglich zu Beginn des Verfahrens, sondern ist es vorteilhaft, hier die Gesamtviskosität im Prozess gezielt einzustellen, wofür die Summe der dekadischen Logarithmen der Glasviskosität $\eta$ des von der Glasscheibe umfassten Glases bei der Entfernung von einem Bauteil zur Durchsatzregulierung, an welcher das Glas nach seinem Auftreffen auf das Floatbad seine maximale Breite erlangt hat und am Ende der Heißformung ein geeignetes Maß ist. Hierfür wird der dekadische Logarithmus der Viskosität $\eta_A$, somit lg ($\eta_A$ /dPa*s), bei der Entfernung von einem Bauteil zur Durchsatzregulierung, an welcher das Glas nach seinem Auftreffen auf das Floatbad seine maximale Breite erlangt hat, und der dekadische Logarithmus der Viskosität $\eta_E$, somit lg ($\eta_E$ /dPa*s), am Ende des Heißformens bestimmt und es liegt die Summe dieser Werte verfahrensgemäß in den vorstehend genannten Grenzen, also zwischen mindestens 11,4 nd höchstens 11,8. Da bei dieser Summe die logarithmischen Werte der Viskositäten $\eta_A$ und $\eta_E$ addiert werden, somit lg ($\eta_A$ /dPa*s) + lg ($\eta_E$ /dPa*s) gebildet wird, entspricht dies auch dem dekadischen Logarithmus der Multiplikation dieser Viskositätswerte, lg ($\eta_A$ /dPa*s) + lg ($\eta_E$ /dPa*s) = lg ($\eta_A$ /dPa*s * $\eta_E$ /dPa*s), Soweit im Rahmen der vorliegenden Offenbarung eine Multiplikation der Viskositätswerte $\eta_A$ und $\eta_E$, oder allgemein von Viskositätswerten erwähnt wird, wie beispielsweise in den Legenden der beiliegenden Figuren, soll damit auch jeweils die Addition von deren jeweiligen dekadischen Logarithmen offenbart sein.

Bislang war es bekannt, die Viskosität zu Beginn des Heißformens auf einen bestimmten Wert einzustellen und auch, diesen Wert eher gering zu wählen. Es hat sich jedoch gezeigt, dass auf diese Weise immer noch erhebliche oberflächennahe Brechkräfte erhalten wurde. Dies zeigt sich insbesondere bei einer genaueren Betrachtung der Oberflächeneigenschaften, insbesondere in der Betrachtung der vorliegend offenbarten oberflächennahen Brechkräfte, insbesondere in oder parallel zu der bei der Heißformung verwendeten Ziehrichtung.

Der Gedanke war hier, dass auf diese Weise eine, niedrig viskose Flüssigkeit vorliegt, die eventuelle Unebenheiten der Oberflächen durch ein Fließen im Heißformgebungsprozess selbst ausgleichen kann.

Überraschenderweise hat sich jedoch gezeigt, dass dies nicht der Fall ist. Vielmehr erscheint es für die Ausbildung besonders geringer Brechkräfte überraschenderweise deutlich vorteilhafter, wenn die Viskosität zunächst gezielt hoch eingestellt wird. Der Mechanismus dahinter ist noch nicht vollständig verstanden.

Weiterhin ist aber auch eine sorgfältige Überwachung der Viskosität - und in entsprechender Weise der Temperaturführung - im Verfahren äußerst vorteilhaft. Auch hat sich gezeigt, dass nicht alleine durch eine gezielt hohe Anfangsviskosität gute, d.h. geringe, oberflächennahe Brechkräfte erzielt werden können. Vielmehr ist es wichtig, wenn eine Gesamtbetrachtung der Viskosität im Formgebungsverfahren erfolgt. Als ein Maß hierfür hat sich daher die Summe der dekadischen Logarithmen bei der Entfernung von einem Bauteil zur Durchsatzregulierung, an welcher das Glas nach seinem Auftreffen auf das Floatbad seine maximale Breite erlangt hat, und am Ende des Heißformens ergeben. Verfahrensgemäß wird die Viskosität so eingestellt, dass die Summe der dekadischen Logarithmen der Viskosität bei der Entfernung von einem Bauteil zur Durchsatzregulierung, an welcher das Glas nach seinem Auftreffen auf das Floatbad seine maximale Breite erlangt hat, und am Ende des Heißformens zwischen mindestens 11,4-und höchstens 11,8 liegt.

Unter "der Entfernung von einem Bauteil zur Durchsatzregulierung, an welcher das Glas nach seinem Auftreffen auf das Floatbad seine maximale Breite erlangt hat", und dem "Ende" des Heißformens werden hierbei zunächst räumliche Begrenzungen des Verfahrens verstanden. Den Beginn der dickenbezogenen Formgebung oder der Formgebungsstrecke Hs, innerhalb welcher eine definierte Dicke des Glases eingestellt wird, stellt der erste Toproller 12, 42 dar, welcher sich am Beginn des zweiten Floatbadabschnittes 28, auch als Bay 2 oder Floatbadabschnitt 2 bezeichnet, dieser befindet, sich jedoch bei einer anderen Entfernung zum Bauteil zur Durchflussregulierung im Vergleich zu der Entfernung, an welcher das Glas nach seinem Auftreffen auf das Floatbad seine maximale Breite erlangt hat. Der erste Toproller ist in Strömungs- oder Ziehrichtung Y etwa 4,5 m von dem Bauteil zur Durchsatzregulierung, dem Tweel, entfernt Präziser wird der Beginn der dickenbezogenen Heißformungsstrecke, innerhalb welcher das Glas seine definierte Dickenänderung erfährt, durch das Lot 52 in negativer z-Richtung ausgehend von der Symmetrieachse 50 des Top-Rollers 42 zur oberen Oberfläche 36, somit zu der oberen Hauptoberfläche 48 des heißzuformenden Glases 8 definiert. Die, insbesondere definierte, dickenbezogene Heißformung ist jedoch nur ein Teil der gesamten Heißformung.

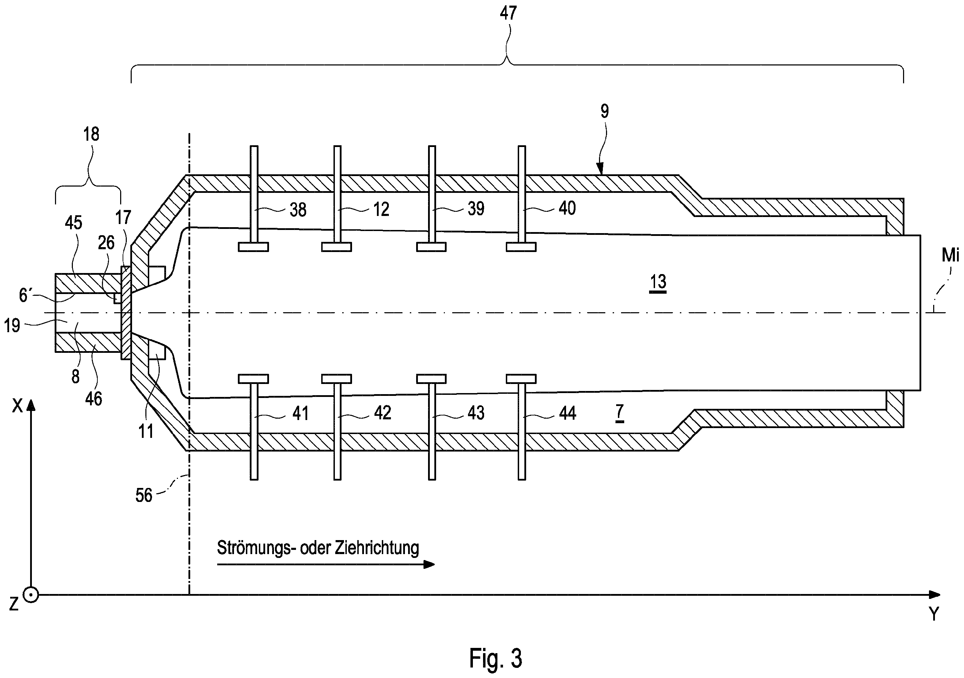

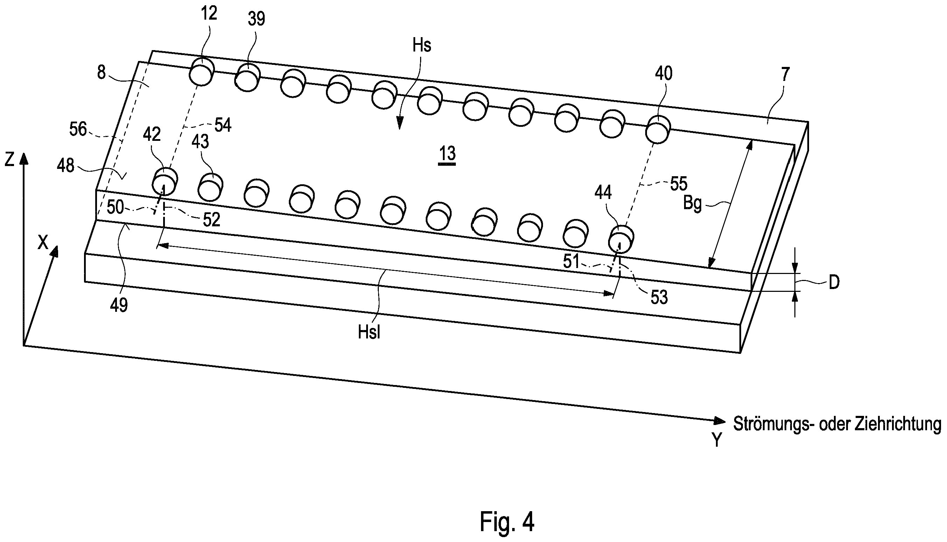

Das Ende der Heißformungsstrecke wird durch den letzten Toproller 40, 44 bestimmt, welcher einen formenden Einfluss auf das heißzuformende Glasband in Strömungs- oder Ziehrichtung ausübt, und ist in Strömungs- oder Ziehrichtung Y etwa 10,5 m bis 11,1 m von dem Bauteil zur Durchsatzregulierung, dem Tweel 17, entfernt. Präziser wird das Ende der Heißformungsstrecke durch das Lot 53 in negativer z-Richtung ausgehend von der Symmetrieachse 51 des letzten formenden Top-Rollers 44 zur oberen Oberfläche, insbesondere zur Hauptoberfläche 48 des heißzuformenden Glases 8 definiert. Die vorstehend erwähnten Top-Roller 12 und 42 sowie 40 und 44 sind beispielsweise auch aus den beiliegenden Figuren 3 und 4 gut zu erkennen.

Die untere Oberfläche oder untere Hauptoberfläche 49 des heißzuformenden Glases liegt während der Heißformung auf dem Floatbad 7 auf.

Vorteilhaft ist nach einer Ausführungsform die Viskosität so eingestellt, dass der dekadische Logarithmus der Viskosität bei der Entfernung von einem Bauteil zur Durchsatzregulierung, an welcher das Glas nach seinem Auftreffen auf das Floatbad seine maximale Breite erlangt hat, somit insbesondere in einer Entfernung in Ziehrichtung Y von einem Bauteil zur Durchsatzregulierung, dem Tweel, von 1,5 m und insbesondere am Anfang eines zweiten Floatbadabschnitts (oder Floatbadabschnitts 2), mindestens 5,0 besonders bevorzugt mindestens 5,1, und vorzugsweise weniger als 5,25 beträgt und vorzugsweise der dekadische Logarithmus zum Ende des Heißformens, insbesondere bei einer Entfernung in Ziehrichtung von etwa 10,5 m bis 11,1 m nach dem Bauteil zur Durchsatzregulierung, dem Tweel, und insbesondere am Anfang eines vierten Floatbadabschnitts, wenigstens 6,2, vorzugsweise mindestens 6,3, besonders bevorzugt mindestens 6,35 beträgt, wobei eine bevorzugte Obergrenze höchstens 6,5 ist.

Die Erfinder sind der Auffassung, dass sich, anders als bislang vermutet, optische Brechkräfte dadurch besonders verringern lassen, dass gerade ein relativ kaltes Heißformen, insbesondere schon am Anfang durchgeführt wird. Bisher war man davon ausgegangen, dass gerade eine warme Fahrweise, insbesondere in dem Bereich eines Glasherstellungsaggregats, in welchem das glasige Material von einem Schmelzaggregat in einem Bereich zum Heißformen überführt wird, von Vorteil in der Verringerung von oberflächennahen Brechkräften ist.

Tatsächlich hat sich gezeigt, dass durch eine sogenannte "heiße Fahrweise", also eine Fahrweise, bei welcher die Viskosität zu Beginn des Heißformprozesses gering ist und beispielsweise deutlich weniger als $10^{5,0}$ dPa*s beträgt, sich im Wesentlichen in Richtung des Ziehens eines Floatglases auftretende länglich erstreckende Erhebungen, welche auch als Ziehstreifen bezeichnet werden, verringert werden können. Diese Ziehstreifen bilden quasi sich in Ziehrichtung erstreckende zylinderlinsenartige Strukturen aus, deren Brechkräfte sich dann im Wesentlichen senkrecht zur Ziehrichtung bemerkbar machen. Allerdings hat sich herausgestellt, dass diese Ziehstreifen, also quer zur Ziehrichtung auftretende Dickenschwankungen des Glasbandes, die sich in Ziehrichtung erstrecken, nicht die Ursache der vorliegend adressierten oberflächennahen Brechkräfte sind. Vielmehr gibt es weitere Phänomene, die die Bildung von Ziehstreifen überlagern und die durch Maßnahmen, die lediglich die Bildung von Ziehstreifen unterdrücken, im Wesentlichen nicht beeinflusst werden.

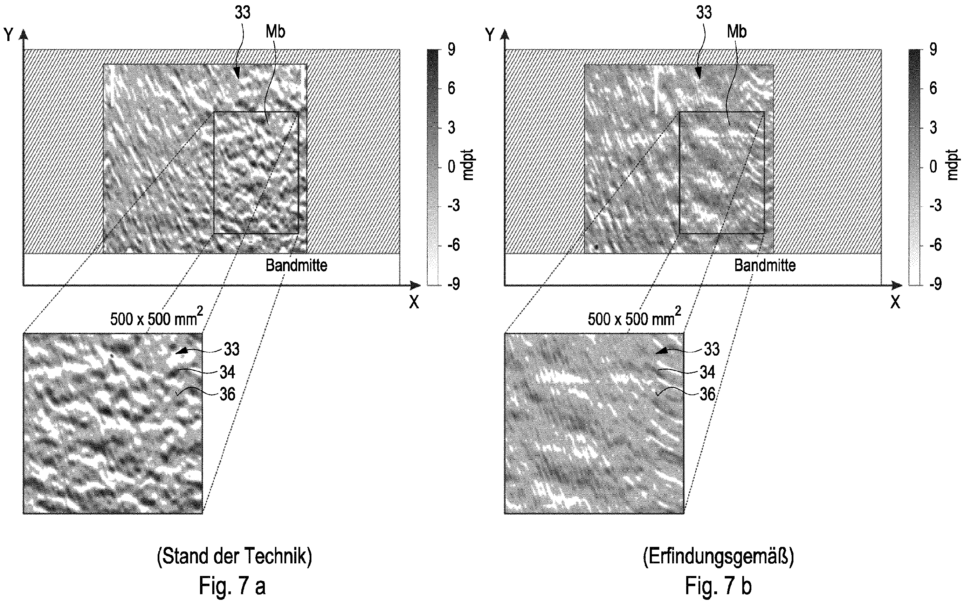

Es hat sich bei dieser Betrachtung überraschenderweise gezeigt, dass bei Verfahren, bei welchen die Viskosität des glasigen Material bei der Entfernung von einem Bauteil zur Durchsatzregulierung, an welcher das Glas nach seinem Auftreffen auf das Floatbad seine maximale Breite erlangt hat, gezielt gering eingestellt wird, also beispielsweise bei unter $10^{5,0}$ dPa*s liegt, das resultierende Glasband zwar weniger Ziehstreifen aufweist, allerdings andere Oberflächenstrukturen, insbesondere in Ziehrichtung auftretende Oberflächenstrukturen, welche in Ziehrichtung verlaufende Brechkräfte entwickeln, verstärkt auftauchen können. Es handelt sich hierbei um kleinflächige Strukturen, die nicht parallel zur Ziehrichtung zu Erhöhungen bzw. Erniedrigungen führen (wie bei den sogenannten Ziehstreifen), sondern irreguläre Strukturen, die an ein Leopardenfell oder "Orangenhaut" erinnern, ausbilden. Derartige Strukturen sind beispielhaft in Figur 7a und Figur 7b mit den sich aus diesen Strukturen ergebenden oberflächennahen Brechkräften als Summe der Brechkräfte sowohl der Oberseite als auch der Unterseite für eine erfindungsgemäße und eine herkömmliche Glasscheibe gezeigt. Mit der Erfindung war es möglich, derartige Strukturen und somit durch diese Strukturen erzeugte oberflächennahe Brechkräfte erheblich zu reduzieren, wie dies beispielhaft auch aus der Darstellung der Figur 7b zu entnehmen ist. Soweit die Darstellung dieser Messfläche Mb in den jeweils oberen Abbildungen der Figuren 7a und 7b keinem Quadrat entspricht, handelt es sich hierbei lediglich um eine Änderung des Abbildungsmaßstabs in Y-Richtung, welcher in den jeweils unteren Abbildungen der Figuren 7a und 7b im Wesentlichen korrigiert wurde, jedoch keine Abweichung von der tatsächlichen Messfläche Mb darstellt.

Für die insgesamt nochmals verbesserte Oberflächenbeschaffenheit solcherart hergestellter Glasbänder bzw. Glasscheiben (nach dem Vereinzeln) ist folglich nicht nur, wie bisher gedacht, die Einstellung der Viskosität zu Beginn des Heißformens wichtig. Vielmehr ist es besonders vorteilhaft, die Gesamtviskosität im Heißformen zu betrachten. Dabei hat sich gezeigt, dass die Viskosität bei der Entfernung von einem Bauteil zur Durchsatzregulierung, an welcher das Glas nach seinem Auftreffen auf das Floatbad seine maximale Breite erlangt hat, sowie zum Ende des Heißformens ein gutes Maß für die Beurteilung des Verfahrens ist. Als einfaches Maß zur Beurteilung des Prozesses kann dabei die Summe der dekadischen Logarithmen der Viskosität bei der Entfernung von einem Bauteil zur Durchsatzregulierung, an welcher das Glas nach seinem Auftreffen auf das Floatbad seine maximale Breite erlangt hat, und am Ende des Heißformens dienen. Verfahrensgemäß liegt die Summe der dekadischen Logarithmen der Viskosität am bei der Entfernung von einem Bauteil zur Durchsatzregulierung, an welcher das Glas nach seinem Auftreffen auf das Floatbad seine maximale Breite erlangt hat und am Ende des Heißformens zwischen mindestens 11,4 nd höchstens 11,8.

Vorzugsweise beträgt der dekadische Logarithmus der Viskosität daher zum Ende des Heißformens, insbesondere am Anfang eines vierten Floatbadabschnitts bei einem Abstand von etwa 10,5 m bis 11,1 m zu einem Bauteil zur Durchsatzregulierung des Stromes des heißzuformenden Glases, wenigstens 6,2, vorzugsweise mindestens 6,3, besonders bevorzugt mindestens 6,35, wobei eine bevorzugte Obergrenze höchstens 6,5 ist. An dieser Stelle im Heißformen, beispielsweise also am Ende eines vierten Floatbadabschnitts, zieht sich das Glasband in einem Heißformverfahren nicht mehr so stark wie zuvor zusammen, sodass dort mittels sogenannter Bortenroller oder Toproller hauptsächlich in Ziehrichtung gezogen wird, und zwar umso stärker, je kälter das Glasband ist.

Dies gilt zwar prinzipiell, es hat sich aber gezeigt, dass nun, gerade auch wenn die Viskosität des Glasbandes bereits bei der Entfernung von einem Bauteil zur Durchsatzregulierung, an welcher das Glas nach seinem Auftreffen auf das Floatbad seine maximale Breite erlangt hat, insbesondere vor einem Bauteil zur Durchsatzregulierung und/oder am Anfang eines ersten Floatbadabschnitts, mindestens 5,0 besonders bevorzugt mindestens 5,1, und weniger als 5,25, beträgt, ein starkes Ziehen der Toproller, gerade auch eines letzten Toprollers, vorliegen muss. Es wird dann an dieser Stelle vorzugsweise ein Zug in Ziehrichtung aufgebracht. Die Toproller stehen jedoch vorzugsweise in der Mitte des Heißformens mit einem Winkel bis 15° nach außen. Die hohe Viskosität am Ende der Formgebung verhindert das Verschmälern (Zusammenziehen) des Glasbandes beispielsweise auch durch den Zug der Kühlbahnrollen.

Allgemein wurde bislang eine zumindest zu Beginn der Heißformung "kalte" Fahrweise in der Glasherstellung als ungünstig betrachtet. Dies hat seinen Grund nicht nur darin, dass damit der Prozess des Herstellens, insbesondere des Heißformens dann insgesamt genauer überwacht werden sollte, sondern auch, dass auf diese Weise nur ein vergleichsweise geringer Durchsatz möglich ist.

In einem solchen Verfahren, insbesondere einem kontinuierlichen Verfahren, wird ein Glasband erhalten, welches nach dem Verlassen eines Kühlofens dann weiterverarbeitet werden kann. Insbesondere ist es hier möglich, dieses Glasband dann zu einer Glasscheibe zu vereinzeln.

Vorteilhaft kann das Verfahren nach der vorliegenden Offenbarung nach einer Ausführungsform in Anlagen durchgeführt werden, die für einen Durchsatz von weniger als 400 t Glas pro Tag, vorzugsweise weniger als 200 t Glas pro Tag und besonders bevorzugt weniger als 100 t Glas pro Tag ausgelegt sind.

Dies liegt daran, dass das Verfahren nicht nur ab einer Entfernung zu dem Bauteil zur Durchsatzregulierung, an welcher das Glas nach seinem Auftreffen auf das Floatbad seine maximale Breite erlangt hat, "kühl", also mit vergleichsweise hoher Viskosität, gefahren wird, sondern auch die Viskosität zum Ende der Heißformung sehr definiert eingestellt wird. Dies ist, wie ausgeführt, zur Einstellung von besonders geringen oberflächennahen Brechkräften äußerst vorteilhaft. Das Einstellen der Temperatur im Heißformgebungsprozess erfolgt im Allgemeinen über Heizaggregate. Wenn jedoch besonders kühl gefahren wird, ist zu berücksichtigen, dass auch das glasige Material selbst Wärme transportiert. Ab einem bestimmten Durchsatz kann es daher bei weiter zunehmenden Durchsätzen notwendig sein, dem glasigen Material selbst Wärme zu entziehen, beispielsweise durch besondere Vorrichtungen zur Kühlung wie Gebläse oder ähnliches. Dies bedeutet nicht nur einen apparativen Mehraufwand und entsprechend höhere Kosten, sondern kann auch dazu führen, dass dem glasigen Material bzw. dem Glasband weitere Eigenschaften aufgeprägt werden, wie beispielsweise thermische Spannungen.

Ist jedoch der Durchsatz, wie beispielsweise vorstehend angegeben begrenzt, ist ein Abführen der durch das glasige Material selbst transportierten Wärme leichter möglich, beispielsweise durch die Einstellung der Temperatur des Zinnbads in den jeweiligen Floatbadabschnitten. Verfahrensführungen in Aggregaten mit eher geringen Durchsätzen sind daher besonders gut geeignet, Glasscheiben mit vorteilhaft geringen oberflächennahen Brechkräften herzustellen, insbesondere, wenn bei diesen das vorliegend offenbarte Verfahren angewendet wird.

Vorteilhaft ist es, wenn das Einstellen der Viskosität der Glasschmelze auch vor dem Überführen in die Vorrichtung zum Heißformen vor einem Lippenstein (oder Spout) oder am Ort eines Lippensteins vorgenommen wird.

Beispiele

Besonders vorteilhaft können mit dem beschriebenen Verfahren Glasscheiben aus oder umfassend ein Borosilikatglas hergestellt werden. Beispielhafte Zusammensetzungen können in dem folgenden Zusammensetzungsbereich, gegeben in Gew.-% auf Oxidbasis liegen:

| | |
|---|---|
| $SiO_2$ | 70 bis 87, bevorzugt 75 bis 85 |
| $B_2O_3$ | 5 bis 25, bevorzugt 7 bis 14 |
| $Al_2O_3$ | 0 bis 5, bevorzugt 1 bis 4 |
| $Na_2O$ | 0,5 bis 9, bevorzugt 0,5 bis 6,5 |
| $K_2O$ | 0 bis 3, bevorzugt 0,3 bis 2,0 |
| CaO | 0 bis 3 |
| MgO | 0 bis 2. |

Insbesondere kann das Glas der Glasscheibe die folgenden Komponenten in Gew.-% auf Oxidbasis umfassen:

| | |
|---|---|
| $SiO_2$ | 70 bis 86 |
| $Al_2O_3$ | 0 bis 5 |
| $B_2O_3$ | 9 bis 25 |
| $Na_2O$ | 0,5 bis 5 |
| $K_2O$ | 0 bis 1 |

Weiterhin kann das Glas der Glasscheibe die folgenden Komponenten in Gew.-% umfassen:

| | |
|---|---|
| $SiO_2$ | 77 bis 80 |
| $Al_2O_3$ | 2 bis 5 |
| $B_2O_3$ | 9 bis 11 |
| $Na_2O$ | 2,6 bis 5,2 |
| $K_2O$ | 0,5 bis 2,5 |
| MgO | 0 bis 2 |
| CaO | 1,2 bis 2,7 |

Beschreibung der Zeichnungen

Die Erfindung wird nachfolgend anhand der beigefügten Zeichnungen und unter Bezugnahme auf bevorzugte und besonders bevorzugte Ausführungsbeispiele detaillierter beschrieben.

Es zeigen:

Figur 1     eine schematische Schnittansicht einer Vorrichtung zum Herstellen einer Glasscheibe und zur Durchführung des vorliegend offenbarten Verfahrens, bei welcher die Schnittebene vertikal in etwa durch die Mitte der Vorrichtung verläuft,

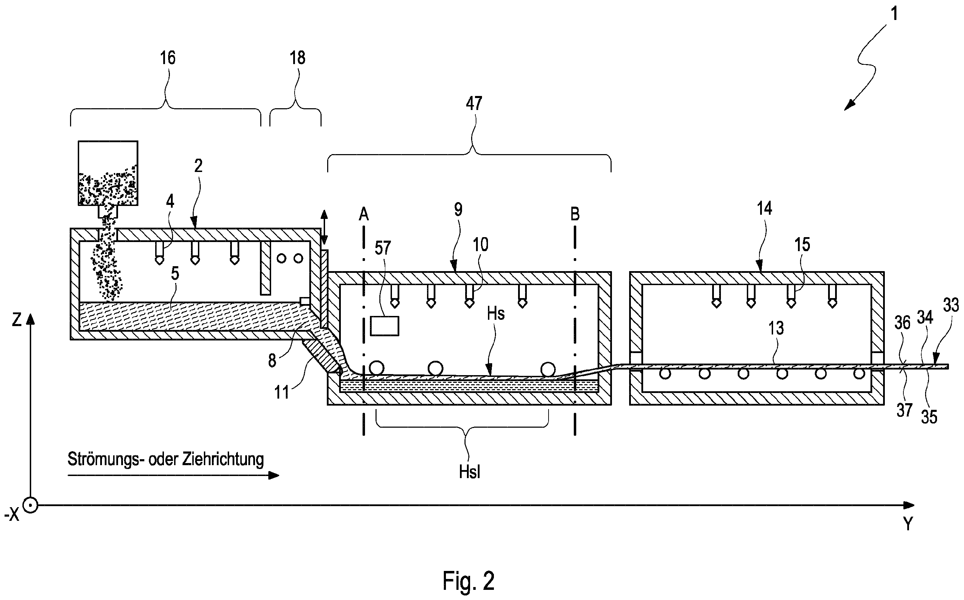

Figur 2     die schematische Schnittansicht der Figur 1 in stark vereinfachter Form, bei welcher der in Figur 4 dargestellte Ausschnitt mit den Schnittebenen A und B markiert ist,

Figur 3     eine schematische Aufsicht auf einen Teil der in Figur 1 und 2 gezeigten Vorrichtung zum Herstellen einer Glasscheibe, insbesondere auf ein heißzuformendes Glasband auf einem Floatbad, bei welcher zur Vereinfachung der Darstellung beispielhaft nur ein Teil der insgesamt verwendeten Top-Roller dargestellt ist,

Figur 4     eine Aufsicht, schräg von oben gesehen, auf einen in Figur 1 und 2 dargestellten Teil der Vorrichtung zum Herstellen eine Glasscheibe in Form eines Ausschnitts, welcher sich zwischen den Schnittebenen A und B erstreckt,

Figur 5     eine beispielhafte Darstellung von vorliegend offenbarten Viskositätsverläufen, in welcher insbesondere auch die Viskositätswerte $\eta_A$ bei einer Entfernung zu dem Bauteil zur Durchsatzregulierung, an welcher das Glas nach seinem Auftreffen auf das Floatbad seine maximale Breite erlangt hat, und die Viskositätswerte $\eta_E$ am Ende des Heißformungsabschnitts, somit dem Ort des Lots 53 zu entnehmen sind,

Figur 6     eine Aufsicht auf die obere, dem Zinnbad bei der Heißformung abgewandten Oberfläche einer mit den vorliegend offenbarten Verfahren hergestellten Glasscheibe zeigend die Summe von deren oberflächennahen Brechkräften sowohl der Oberseite als auch der Unterseite der Glasscheibe einer lediglich beispielhaft und nicht maßstabsgerecht dargestellten Messfläche Mb zur Ermittlung der oberflächennahen Brechkräfte bei einem Verkippungswinkel von 55° gemessen,

Figur 7     die Summe der oberflächennahen Brechkräfte der Oberseite und der Unterseite einer Glasscheibe innerhalb einer Messfläche Mb, in Figur 7a einer herkömmlichen und in Figur 7b einer mit dem vorliegend offenbarten Verfahren hergestellten Glasscheibe in mdpt für erfindungsgemäße Werte der Summe des dekadischen Logarithmus der Viskosität $\eta_A$, somit lg ($\eta_A$ /dPa*s), des jeweiligen Glases bei einer Entfernung zu dem Bauteil zur Durchsatzregulierung, an welcher das Glas nach seinem Auftreffen auf das Floatbad seine maximale Breite erlangt hat und des dekadischen Logarithmus der Viskosität $\eta_E$, somit lg ($\eta_E$ /dPa*s), am Ende des Heißformens in einer ortsaufgelösten Darstellung, jeweils bei einem Verkippungswinkel von 55° gemessen,

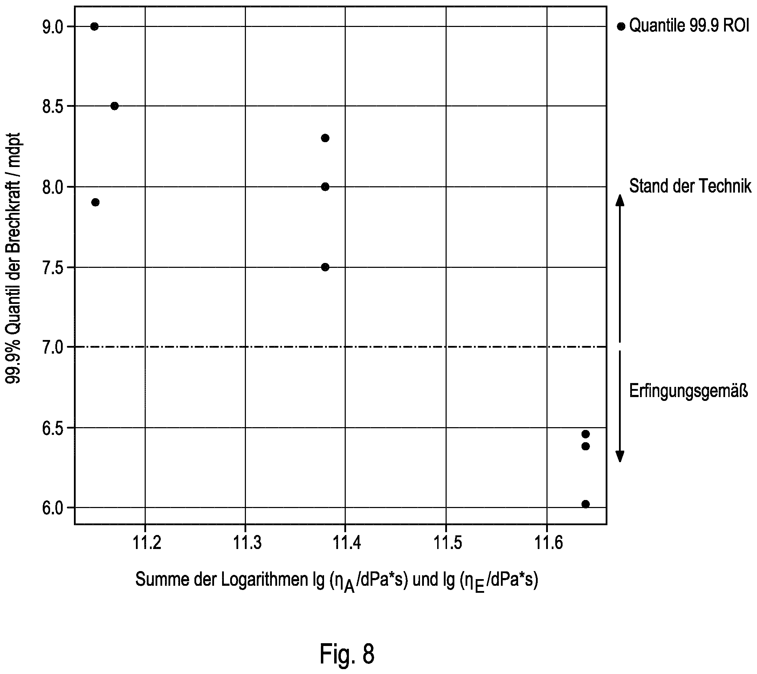

Figur 8     99, 9 % Quantile der Summe der oberflächennahen Brechkräfte der Oberseite und der Unterseite einer Glasscheibe innerhalb einer Messfläche Mb, von herkömmlichen und einer mit dem vorliegend offenbarten Verfahren hergestellten Glasscheibe in mdpt als Funktion des Werts der Summe des dekadischen Logarithmus der Viskosität $\eta_A$, somit lg ($\eta_A$ /dPa*s), und des dekadischen Logarithmus der Viskosität $\eta_E$, somit lg ($\eta_E$ /dPa*s), bei einem Verkippungswinkel von 55° gemessen,

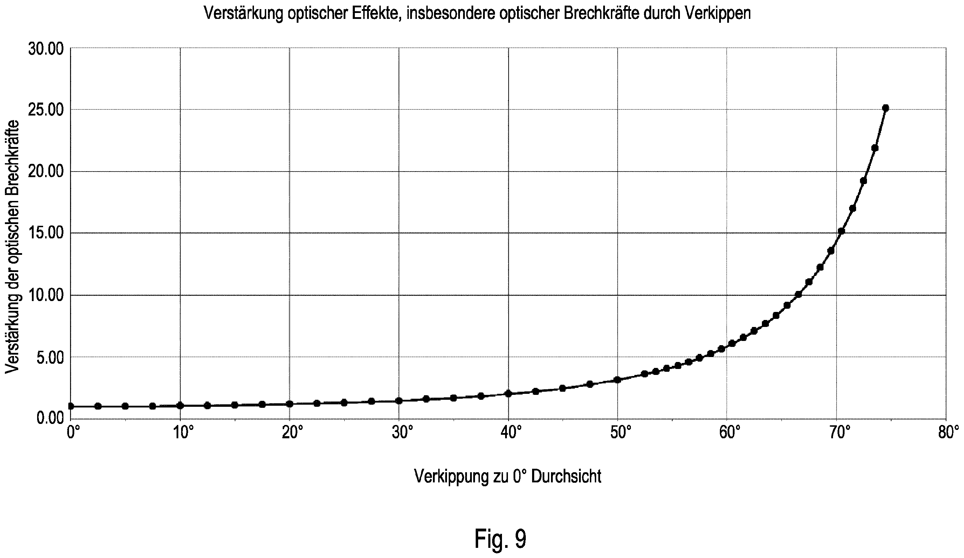

Figur 9     eine Darstellung der Verstärkung optischer Effekte durch Verkippung, wie diese insbesondere bei der Messung der Summe oberflächennaher Brechkräfte der Oberseite und der Unterseite einer Glasscheibe auftritt,

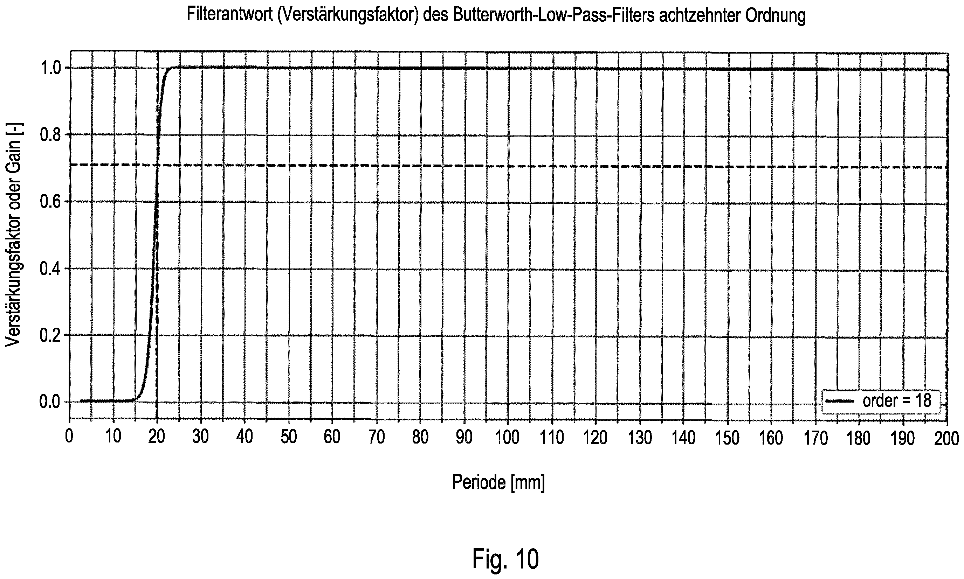

Figur 10     die Filterantwort, somit den Verstärkungsfaktor, des Butterworth-Low-Pass-Filters achtzehnter Ordnung, wie dieses zur Filterung der von dem Messgerät ISRA VISION LABSCAN-SCREEN 2D erhaltenen ungefilterten Rohdaten verwendet wurde, als Funktion der Periode oder Wellenlänge der Rohdaten in Y- oder Ziehrichtung, welche vor deren Filterung aus den für eine verkippte Glasscheibe erhaltenen Daten für eine unverkippte Scheibe umgerechnet wurden.

Detaillierte Beschreibung bevorzugter Ausführungsformen

Bei der nachfolgenden Beschreibung bevorzugter und besonders bevorzugter Ausführungsformen bezeichnen in den verschiedenen Figuren gleiche Bezugszeichen gleiche oder gleichwirkende Bestandteile der hier jeweils offenbarten Vorrichtung.

Die Angaben zur Dicke D der Glasscheibe 33 entsprechen dem Abstand der zwei Hauptoberflächen, somit der Oberseite 34 und der Unterseite 35 der Glasscheibe 33 nach deren Heißformung und sind jeweils senkrecht zu diesen Hauptoberflächen zu messen, wie dies beispielhaft in Figur 4 dargestellt ist.

Die in den Figuren 1, 2 und 3 dargestellte Floatanlage zur Durchführung des vorliegend offenbarten Verfahrens weist einen auch als Schmelzwanne bezeichneten Einschmelzofen 2 auf, welchem in bekannter Weise ein zu erschmelzendes Gemenge, insbesondere Glasgemenge 3 zugeführt und mittels Brennern 4 so lange erhitzt wird, bis sich eine Glasschmelze 5 der erwünschten Zusammensetzung ausbildet. Weitere Einrichtungen zur Homogenisierung der Glasschmelze sind dem Fachmann bekannt und werden folglich nicht detaillierter beschrieben.

Durch einen Kanal 6 gelangt das geschmolzene Glas der Glasschmelze 5, in der Regel unter dem Einfluss der Schwerkraft auf ein Floatbad 7, welches flüssiges Zinn aufweist, und auf welchem sich das heißzuformende Glas 8 als Teil seiner Heißformung unter dem Einfluss der Schwerkraft unter Verminderung seiner Höhe seitlich ausbreiten kann.

Zur Einstellung der Temperatur des heißzuformenden Glases kann das Zinnbad 7 in einem Floatbadofen 9 angeordnet sein, welcher über elektrische Deckenheizer 10 verfügt, mittels welchen die Temperatur des heißzuformenden Glases einstellbar ist. Ferner kann die Temperatur des Zinnbads 7 in Ziehrichtung definiert eingestellt werden und auf diese Weise die Temperatur des heißzuformenden Glases und somit dessen Viskosität definiert beeinflussen.

Beim Verlassen der Schmelzwanne 2 wird das geschmolzene, heißzuformende Glas 8 über eine auch als Lippenstein oder Spout bezeichnete schräg nach unten verlaufende Einlauflippe 11, auf welcher es sich bereits zu verbreitern beginnt, auf das Zinnbad 7 geführt. Bei einer Entfernung von 1.5 m zum Bauteil zur Durchsatzregulierung, somit einer Entfernung von 1,5 m in Y-Richtung in der Mitte Mi des Glasbands 13 bezüglich der X-Richtung weist das Glasband 13 seine größte Breite, dies bedeutet seine größte Erstreckung in X-Richtung auf. Diese Entfernung liegt bei den offenbarten Ausführungsformen bei etwa 1,5 m und ist beispielsweise in Figur 4 mit dem Bezugszeichen 56 angegeben. Mit walzenförmigen Top-Rollern 12 als Zugeinrichtung wird das sich auf dem Zinnbad 7 ausbildenden Glasband 13 in seiner Ausbreitungsbewegung von der Seite her in seiner weiteren Bewegung definiert beeinflusst. In Figur 1 sind lediglich jeweils drei Top-Roller beispielhaft dargestellt, jedoch können je nach Bedarf auch mehr als zwei dieser Top-Roller vorhanden sein und verwendet werden, wie dieses beispielsweise auch aus Figur 3 und 4 zu entnehmen ist.

Als Top-Roller wird ein dem Fachmann auf diesem Gebiet wohlbekannter im Wesentlichen walzenförmiger Körper bezeichnet, der mit seiner äußeren ringförmigen Schulter mit der dem Zinnbad abgewandten Hauptoberfläche oder oberen Oberfläche 48 des heißzuformenden Glases 8 in Kontakt steht und durch eine Drehbewegung jeweils um seine Längs- oder Symmetrieachse 50, 51 jeweils eine Kraft auf das heißzuformende Glas 8 ausübt. Diese Symmetrieachse 50, 51 ist lediglich beispielhaft für die Top-Roller 42 und 44 dargestellt. Im Rahmen der vorliegenden Offenbarung kann der Begriff des Top-Rollers auch als im Wesentlichen walzenförmige Transportvorrichtung für das heißzuformende Glas verstanden werden. Hierbei stellt der erste Top-Roller 12, 42 eine im wesentlichen walzenförmige Transportvorrichtung für das heißzuformende Glas am Anfang des Abschnitts Hs der, insbesondere definierten, dickenbezogenen Heißformungsstrecke und der letzte Top-Roller 40, 44 eine im wesentlichen walzenförmige Transportvorrichtung für das heißzuformende Glas am Ende des Abschnitts Hs der Heißformungsstrecke dar. Im Verlauf dieser dickenbezogenen Heißformungsstrecke Hs wird die Dicke des Glasbands 13 definiert eingestellt, jedoch umfasst diese Heißformungsstrecke Hs nicht sämtliche heißformgebenden Maßnahmen, da auch ab der Entfernung 56 zu dem Bauteil zur Durchsatzregulierung, an welcher das Glas nach seinem Auftreffen auf das Floatbad seine maximale Breite erlangt hat, bis zum Anfang des Anschnitts Hs bereits eine Formung des heißzuformenden Glases 8 des Glasbands 13 erfolgt.

Durch den mit der äußeren ringförmigen Schulter des jeweiligen Top-Rollers in Kontakt stehenden Teil des heißzuformenden Glases 8 wird dieses definiert bewegt. Der Top-Roller ist jeweils mit einer im wesentlichen stabförmigen Achse motorisch steuerbar definiert angetrieben.

Als Ort oder Lage des Top-Rollers, insbesondere in Strömungsrichtung Y des Glases 8 wird im Rahmen der vorliegenden Offenbarung jeweils das Lot 52, 53 in negativer z-Richtung ausgehend von der jeweiligen Symmetrieachse 50, 51 des entsprechenden Top-Rollers 42, 44 zur Oberfläche, insbesondere zur Hauptoberfläche 48 des heißzuformenden Glases 8 verstanden.

Die Lage oder der Ort des jeweils ersten Top-Rollers 12, 42 definiert den Eintritt des Glases 8 in den Abschnitt Hs zu dessen Heißformung bezüglich seiner Dicke.

Die Lage oder der Ort des jeweils letzten Top-Rollers 40, 44 definiert den Austritt des Glases 8 aus dem Abschnitt Hs zu dessen dickenbezogenen Heißformung und somit zu dessen insgesamter Heißformung.

Zur Vereinfachung bezeichnet im Rahmen der vorliegenden Offenbarung die Erwähnung des ersten Top-Rollers jeweils das Paar an Top-Rollern, beispielsweise die Top-Roller 42, 12, welche an gleichem Ort in Strömungsrichtung liegt und bezeichnet die Erwähnung des letzten Top-Rollers jeweils das Paar an Top-Rollern, beispielsweise die Top-Roller 44, 40, welche jeweils an gleichem Ort in Strömungs- oder y-Richtung liegen.

Der Ort des Eintritts des Glases 8 in den Abschnitt Hs zur dickenbezogenen Heißformung ist folglich durch die gestrichelt dargestellte Linie 54 erkennbar wohingegen der Ort des Austritts des Glases 8 aus dem Abschnitt Hs zur Heißformung durch die gestrichelt dargestellte Linie 55 angegeben wird.

Mit einer weiteren gestrichelten Linie ist der Ort oder die Entfernung 56 zu dem Bauteil zur Durchsatzregulierung angegeben, an welcher das heißzuformende Glas 8 nach seinem Auftreffen auf das Floatbad 7 seine maximale Breite erlangt hat.

Als Länge Hsl des Abschnitts Hs zur dickenbezogenen Heißformung wird im Rahmen der vorliegenden Offenbarung der Abstand in Strömungs- oder y-Richtung zwischen dem Lot 52 des ersten Top-Rollers 42 zum Lot 53 des letzten Top-Rollers 44 verstanden.

Nach seiner Heißformung kann das Glasband 13 gegebenenfalls in einen Kühlofen 14 überführt werden, welcher ebenfalls über elektrische Decken- und Bodenheizer 15 verfügen kann, um das Glasband 13 einer definierten Temperaturabsenkung zu unterziehen, wobei beispielhaft in Figur 1 nur Deckenheizer dargestellt sind.

Nach Verlassen des Kühlofens 14 steht das Glasband 13 dann zu einer weiteren Verarbeitung, insbesondere Vereinzelung in Glasscheiben 33 zur Verfügung.

Um bei der nachfolgenden Beschreibung bevorzugter Ausführungsformen räumliche Anordnungen verschiedener Baugruppen oder von Eigenschaften, beispielsweise von heißzuformenden Gläsern oder nach der Heißformung vereinzelten Glasscheiben 33 klarer darstellen zu können, wird zunächst auf das in Figur 1, 2, 3 und 4 dargestellte kartesische Koordinatensystem verwiesen, welches eine orthogonale X-, Y- und Z-Richtung definiert, auf die sich nachfolgend alle Angaben bei den verschiedenen Figuren weiter beziehen.

Die X- und Y-Richtung spannt eine Ebene auf, welche sich horizontal erstreck und damit auch im Wesentlichen parallel zur Oberfläche des Zinnbads 7 verläuft. Senkrecht zu dieser Ebene verlaufend erstreckt sich die Z-Richtung nach oben und definiert hiermit auch die Normalenrichtung in Bezug auf das Glasband 13.

Nachfolgend wird auf Figur 1 Bezug genommen, welche als Vorrichtung zum Herstellen eines Glasbands 13, aus welchem die vorliegend offenbarten Glasscheiben 33 vereinzelbar sind, die insgesamt mit dem Bezugszeichen 1 versehende Floatanlage umfasst, welche über sämtliche mit Bezug auf Figur 2, 3 und 4 beschriebenen Einrichtungen oder Vorrichtungen verfügt.

Als Einrichtung zum Schmelzen 16, ist hierbei die Schmelzwanne oder der Einschmelzofen 2, eine Zuführungseinrichtung für das Glasgemenge 3 und sind die Brenner 4 umfasst. Ferner weist die Schmelzwanne 2 einen Kanal 6 zur Überführung des geschmolzenen, heißzuformenden Glases 8 auf das Zinnbad 7 auf.

Beispielhaft ist hinter dem Kanal 6 der Regelschieber 17, somit das Bauteil zur Durchsatzregulierung des Glasstroms, welches auch als Tweel bezeichnet wird, angeordnet. Durch Verschiebung des Regelschiebers oder Tweels 17, welche das Bauteil 17 zur Durchsatzregulierung bilden, in Richtung des neben dem Bezugszeichen 17 dargestellten Doppelpfeils kann der Querschnitt des Kanals 6 verengt oder vergrößert werden, wodurch die Menge des pro Zeiteinheit des aus der Schmelzwanne 2 austretenden geschmolzenen und heißzuformenden Glases 8 geregelt und insbesondere definiert eingestellt werden. Ferner kann zwischen der Schmelzwanne 2 und dem Floatbadofen 9, insbesondere vor dem Tweel 17 eine Speiserinne angeordnet sein, welche in diesem Fall den Kanal 6, insbesondere auch über eine längere als in Figur 1 dargestellte Strecke ausbildet. Eine detailliertere Beschreibung der Durchsatzregulierung findet sich in der DE 10 2013 203 624 A1 der gleichen Anmelderin, welche durch Bezugnahme auch zum Gegenstand der vorliegenden Anmeldung gemacht wird.

In Strömungsrichtung des geschmolzenen und heißzuformenden Glases 8 gesehen ist eine Einrichtung 18 zur definierten Einstellung der Viskosität des geschmolzenen und heißzuformenden Glases 8 vor dem Bauteil zur Durchsatzregulierung 17 und vor dem Lippenstein oder Spout 11 angeordnet.

Diese Einrichtung 18 zur definierten Einstellung der Viskosität umfasst eine Kammer 19, welche von der Schmelzwanne 2 abgetrennt ist oder auch einen Teil von dieser bilden kann und das geschmolzenen zu einem Glassubsubstrat zu formenden Glas 8 zur definierten Einstellung seiner Viskosität aufnimmt.

Ferner umfasst die Einrichtung 18 zur definierten Einstellung der Viskosität fluiddurchströmte Bereiche 20, 21, insbesondere von Wasser durchströmte Bereiche, welche Wärme von dem heißzuformenden Glas 8 aufnehmen und als metallisches Rohrsystem ausgebildet sein können. Dieses metallische Rohrsystem kann auch zur besseren Wärmeaufnahme eingefärbt oder mit einer temperaturfesten Farbe auf dessen Oberfläche versehen sein.

Alternativ oder zusätzlich können auch die Wände 22, 23, 24 und 25 der Kammer 19 Wärme von dem heißzuformenden Glas 8 aufnehmen, indem deren Temperatur, beispielsweise durch weitere Kühleinrichtungen definiert eingestellt wird.

Die Kammer 19 kann mit deren Wänden 22, 23, 24 und 25 auch räumlich getrennt von der Schmelzwanne 2 ausgebildet sein und über hochtemperaturfeste metallische Wände verfügen, um eine verbesserte Wärmeableitung zur Verfügung zu stellen.

Wie vorstehend beschrieben umfasst die Einrichtung 18 zur definierten Einstellung der Viskosität zumindest eine Kühleinrichtung, mittels welcher die Temperatur und somit auch die Viskosität des heißzuformenden Glases 8 definiert einstellbar ist.

Berührungsfreie sowie alternativ oder zusätzlich direkte Temperaturmessungen in Berührung mit dem zu messenden Glas sind dem Fachmann bekannt. Entsprechende Sensoren sind beispielsweise mit der sensorischen Einrichtung oder Einheit 26 im Rahmen dieser Offenbarung beschrieben.

Die sensorische Einrichtung oder Einheit 26 kann sich in direktem Glaskontakt befinden und somit eine direkte Temperaturmessung vornehmen oder auch eine Strahlungsmesseinrichtung umfassen, welche durch Erfassung des vom heißzuformenden Glases 8 emittierten Spektrums anhand des Spektrums selbst und/oder der Intensität der abgegebenen Strahlung die Temperatur erfasst.

Die Vorrichtung 1 umfasst eine Einrichtung oder Vorrichtung 47 zur Heißformung, welche nachfolgend detaillierter beschrieben wird, die sich in Strömungs- oder Ziehrichtung hinter der Einrichtung 18 zur definierten Einstellung der Viskosität befindet und über den Lippenstein oder Spout 11 das heißzuformende Glas 8 aufnimmt.

Der Lippenstein oder Spout 8 leitet das heißzuformende Glas 8 auf ein Zinnbad 7, welches im Floatbadofen 9 aufgenommen ist.

Eine weitere Kühleinrichtung 57 ist in einer Entfernung zu dem Bauteil zur Durchsatzregulierung 17 von etwa 2 m bezogen auf deren Mitte in Y-Richtung oberhalb des heißzuformenden Glases 8 angeordnet. Diese Kühleinrichtung 57 ragt über die Schmelze und kann in Y-Richtung 300 mm breit, in Z-Richtung 80 mm hoch und in X-Richtung 2,5 m lang und zweiteilig ausgebildet sein. Hierbei ragt jeweils von in X-Richtung gegenüberliegenden Seiten ein Teil der Kühleinrichtung 57 über das heißzuformende Glas und stellt somit eine im Wesentliche vollständige Überdeckung des heißzuformenden Glases 8 in X-Richtung und bereichsweise in Y-Richtung zur Verfügung.

Die Kühleinrichtung 57 schattet das heißzuformende Glas 8 nicht nur gegenüber den Deckenheizern 10 ab, sondern bewirkt auch einen von oberhalb des Glases 8 kommenden kühlenden Luftstrom, mit welchem es möglich ist, das unter der Kühleinrichtung 57 befindliche Glas 8 um ca. 20 bis 25 K abzukühlen. Hierdurch kann bei der bereits anfänglich hohen Viskosität des Glases 8 im weiteren Verlauf in Ziehrichtung ein insgesamt flacherer Verlauf der Viskositätskurve erzeugt werden, wie dieser beispielsweise auch in Figur 5 dargestellt ist.

Oberhalb des sich auf dem Zinnbad 7 ausbildenden Glasbands 13 sind, wie auch gut aus Figur 3 zu erkennen ist, weitere Top-Roller 38 bis 44 neben dem Top-Roller 12 zur mechanischen Bewegung des Glasbands 13 angeordnet.

Hierbei ist die Anzahl der in Figur 3 dargestellten Top-Roller lediglich beispielhaft, denn bei bevorzugten Ausführungsformen der Erfindung werden vorzugsweise 10 bis 12 Paare von Top-Rollern verwendet.

Die Top-Roller 41 und 38 dienen lediglich der Einstellung der Breite des sich bei der Heißformung ergebenden Glasbands Bg 13 und sind optional, da die Breite Bg auch auf andere Weise einstellbar ist, beispielsweise durch Regelung der Menge des Glases 8, welches zur Heißformung bereitgestellt wird.

Figur 3 ist weiterhin eine alternative oder zusätzliche Ausgestaltung der Einrichtung 18 zur definierten Einstellung der Viskosität zu entnehmen. Das geschmolzene Glas 8 befindet sich in einem Kanal 6 der von der in Figur 3 nicht dargestellten Schmelzwanne 2 zum Floatbadofen 9 führt. Die Wände 45, 46 des Kanals 6 sind aus einem hochtemperaturfesten Metall, beispielsweise Platin gebildet, welches auch als metallische Schicht auf einem mineralischem feuerfesten Material angeordnet sein kann. Durch die definierte Einstellung der Temperatur dieser Wände kann dem Glas 8 Wärme entzogen und auch dessen Temperatur sowie Viskosität definiert eingestellt werden. Auch bei dieser Ausführungsform kann die vorstehend beschriebene sensorische Einheit 26 vorzugsweise in der Nähe des Tweels 17 angeordnet sein.

Vorstehend wurde für die Vorrichtung 47 zur Heißformung eine Zieheinrichtung beschrieben, welche eine Floateinrichtung, insbesondere einen Floatbadofen 9 mit einem Zinnbad 7 umfasst.

Beispielhaft wird das hier offenbarte Verfahren nachfolgend anhand eines Floatverfahrens beschrieben.

In Figur 4 ist ein sich zwischen den Schnittebenen A und B erstreckender Ausschnitt der Vorrichtung 1 zum Herstellen eines Glasbands 13 für eine aus diesem zu vereinzelnde Glasscheibe 33, dargestellt, bei welchem um der besseren Erkennbarkeit Willen nur das heißzuformende Glas 8, sowie das Floatbad 7, welches als Zinnbad ausgebildet ist, gezeigt sind.

Das Glas 8 bewegt sich von der linken Seite der Figur 4 kommend mit einer Eintrittsgeschwindigkeit auf den ersten Top-Roller 42, 12 zu, bei welchem die hier offenbarte dickenbezogene Heißformung zu einem Glasband 13 für eine daraus zu vereinzelnde Glasscheibe 33 beginnt. Diese Geschwindigkeit entspricht der Geschwindigkeit des Glases 8 am ersten Top-Roller 42, 12. Das Glas 8 bewegt sich nach dem letzten Top-Roller 40, 44 somit nach seiner hier beschriebenen Heißformung zu einem Glasband 13 für eine daraus zu vereinzelnde Glasscheibe 33 mit einer Austrittsdicke D weiter in Strömungsrichtung.

Soweit im Rahmen der vorliegenden Offenbarung abgekürzt lediglich von einer Heißformung gesprochen wird, bezeichnet dies um der sprachlichen Einfachheit Willen die nachfolgend noch detaillierter beschriebene Heißformung zu einem Glasband 13 für eine daraus, insbesondere nach Abkühlen des Glasbands 13 aus diesem zu vereinzelnde Glasscheibe 33, sowohl entlang des Abschnitts Hs der dickenbezogenen Heißformungsstrecke, als auch weitere Heißformungsschritte, welche bereits vor dem Erreichen des ersten Top-Rollers stattgefunden haben können, wie beispielsweise beim Aufgießen des Glases 8 auf das Floatbad 7, bei welchem sich das Glas flächig ausbreiten und seine Gleichgewichtsdicke Dg von etwa 7 mm +/- 1 mm annehmen kann.

Nach der Heißformung weist das Glas 8 eine Austrittsdicke von D auf, welche dieses nach dem letzten Top-Roller 40, 44 angenommen hat.

Das Glas 8 weist während seiner gesamten dickenbezogenen Heißformung zu einem Glasband 13 für eine daraus zu vereinzelnde Glasscheibe 33 zwischen dem ersten Top-Roller 42, 12 und dem letzten Top-Roller 40, 44, somit im Abschnitt Hs, eine Breite Bg auf, somit eine Erstreckung x-Richtung von Bg auf, welche bei dieser dickenbezogenen Heißformung in x-Richtung vorzugsweise um weniger als 3 % geändert wird. Dies kann durch Einstellung der Rotationsgeschwindigkeit und -winkel entlang der Symmetrieachse (Rotationsachse) der jeweiligen Top-Roller sichergestellt werden. Hierbei kann insbesondere auch der Winkel der jeweiligen Symmetrieachse des entsprechenden Top-Rollers so geändert werden, dass sich hierdurch beim Transport heißzuformenden Glases 8, insbesondere entlang der dickenbezogenen Heißformungstrecke Hs, mehr oder weniger starke Beiträge der Bewegung des heißzuformenden Glases 8 oder von Teilen des Glasbands 13 in x-Richtung ergeben.

Bei einer Entfernung 56 von einem Bauteil zur Durchsatzregulierung 17, an welcher das Glas nach seinem Auftreffen auf das Floatbad seine maximale Breite erlangt hat, wird die Viskosität $\eta_A$, insbesondere durch Einstellung der Temperatur des Glasbands 13 an diesem Ort so eingestellt, dass diese einen Wert von lg ($\eta_A$ /dPa*s), von mindestens 5,0-, besonders bevorzugt mindestens 5,1 und weniger als 5,25 aufweist.

Am Ende der Heißformungsstrecke Hs wird die Viskosität $\eta_E$, insbesondere durch Einstellung der Temperatur des Glasbands 13 an diesem Ort so eingestellt, dass diese einen Wert von lg ($\eta_E$ /dPa*s) aufweist, welcher wenigstens 6,2, vorzugsweise mindestens 6,3, besonders bevorzugt mindestens 6,35 beträgt, wobei eine bevorzugte Obergrenze höchstens den Wert 6,5 annimmt.

Erfindungsgemäß wird die Viskosität in der Vorrichtung zum Heißformen so eingestellt ist, dass die Summe der dekadischen Logarithmen der Viskosität lg ($\eta_A$ /dPa*s) und lg ($\eta_E$ /dPa*s) bei der Entfernung 56 von einem Bauteil zur Durchsatzregulierung 17, an welcher das Glas nach seinem Auftreffen auf das Floatbad seine maximale Breite erlangt hat, und am Ende des Heißformens zwischen mindestens 11,4-und höchstens 11,8 $\eta$ dPa*s liegt.

Eine beispielhafte Darstellung entsprechender Viskositätsverläufe ist der Figur 5 zu entnehmen, in welcher insbesondere auch die Viskositätswerte $\eta_A$ bei der Entfernung 56 von einem Bauteil zur Durchsatzregulierung 17, an welcher das Glas nach seinem Auftreffen auf das Floatbad seine maximale Breite erlangt hat, und die Viskositätswerte $\eta_E$ am Ende der Heißformungsstrecke, somit des Lots 53 zu entnehmen sind.

Figur 6 ist eine Aufsicht auf die obere, dem Zinnbad bei der Heißformung abgewandten oberen Oberfläche oder Hauptoberfläche 48 einer mit den vorliegend offenbarten Verfahren hergestellten Glasscheibe 33 mit einer lediglich beispielhaft und nicht maßstabsgerecht dargestellten Messfläche Mb zur Ermittlung der oberflächennahen Brechkräfte unter einem Messwinkel von 55° zu entnehmen. Dieser Figur sind die mit den vorliegend offenbarten Verfahren erreichbaren oberflächennahen Brechkräfte mit deren jeweiligen Werten zu entnehmen, welche nachfolgend unter Bezugnahme auf

Figur 7 noch detaillierter erläutert werden. Die Messfläche Mb überdeckte hierbei die Bandmitte des heißzuformenden Glasbands in X-Richtung, grenzte an diese an oder wies zu dieser einen Abstand von weniger als etwa 200mm auf.

Die optische Brechkraft P(x,y) einer Oberfläche einer Glasscheibe mit Erhebungen z(x, y) in Z-Richtung mit der Höhe H auf einer Oberfläche der Glasscheibe ergibt sich dann, wenn man diese entlang einer in Y-Richtung verlaufenden Geraden jeweils bei einem festen Wert von x bestimmt für in für Brechkraftmessungen üblicher Weise senkrecht auf die Oberfläche einfallendes Licht:

$$P(y) = (n-1)\,\kappa(y) = (n-1)\frac{z''(y)}{\left(1 + z'(y)^2\right)^{3/2}}$$

wobei

n den Brechungsindex der gemessenen Glasscheibe darstellt und jeweils bei der gemessenen Glasscheibe einen Wert von 1,471 aufwies,

z (y) und z"(y) die erste und zweite Ableitung der Erstreckung

z(y) in Y-Richtung, somit in Ziehrichtung darstellen und

z(y) die Erstreckung in z-Richtung am Ort y bei einem zugeordneten, insbesondere festen Wert von x ist.

Somit können bei bekanntem Brechungsindex n der Glasscheibe prinzipiell auch mit profilometrischen Messverfahren erhaltene Werte z(x, y) in Brechkräfte, insbesondere wie vorstehend dargestellt in Y-Richtung verlaufende Brechkräfte umgerechnet werden. Da die vorstehende Berechnung der optischen Brechkraft nur eine Oberfläche umfasst, müssen jedoch, um aus den geometrischen Daten der Oberflächen zu den vorliegend offenbarten Werte zu gelangen, die Brechkräfte beider Seiten, somit der Oberseite und der Unterseite der Glasscheibe berechnet und addiert werden. Somit kann weder die Angabe der Brechkraft einer Oberfläche einer Glasscheibe noch einer Struktur einer Oberfläche einer Glasscheibe die vorliegenden Messungen wiedergeben, bei welchen jeweils beide Oberflächen der gemessenen Glasscheibe erfasst und in Summe angegeben werden.

Branchenüblich wurde jedoch für die tatsächliche Messung das optisch messende System ISRA VISION LABSCAN-SCREEN 2D mit dem Filter 4/5/0 (Winkel/Brechkraft/Differenzierungslänge/) verwendet, mit welchem gleichzeitig sowohl die Brechkräfte der Oberseite als auch der Unterseite der aus dem Glasband vereinzelten Glasscheibe gemessen wurden. Die Messung umfasste jeweils zeilenweise in der bei der Heißformung verwendeten Ziehrichtung erfasste Daten, wobei sich die jeweilige Messzeile in Ziehrichtung erstreckte.

Wird diese Brechkraft jedoch für schräg zur Oberfläche des Glases einfallendes Licht bestimmt, verstärken sich die Brechkräfte als Funktion des Verkippungswinkels $\Phi$ entsprechend der nachfolgenden Gleichung 1:

$$P(\Phi) = \frac{F(\Phi)}{(n-1)\cos(\Phi)} ,$$

wobei

$$F(\Phi) = \frac{\sqrt{n^2 - \sin(\Phi)^2}}{\cos(\Phi)} - 1$$

P = relative optische Stärke durch Verkippung
$\Phi$ = Kippwinkel
n = Brechungsindex Glas

Hierbei ergab sich durch den Winkel der Verkippung $\Phi$ = 55° eine Verstärkung der gemessenen optischen Brechkräfte um den Faktor 4,2 wodurch die Genauigkeit der Betrachtung in Verkippungsrichtung steigt. Die Messpositionen wurden für eine nicht verkippte Glasscheibe zurückgerechnet und entsprechen somit der realen Glasscheibe. Dies bedeutet, dass für senkrecht auf die Glasscheibe auftreffendes Licht nur Brechkräfte der Oberseite der Glasscheibe addiert mit den Brechkräften der Unterseite der Glasscheib wirken, welche um diesen Faktor 4.2 geringer sind.

Messungen an verkippten Glasscheiben sind dem Fachmann beispielsweise aus der DIN 52305 oder der EN 572-2 betreffend Verfahren bei der Feststellung der optischen Qualität von "Floatglas" für die Messung des Zebrawinkels bei Flachglas bekannt. In ähnlicher Weise wie in dieser Norm beschrieben wurden die Glasscheiben um den Winkel $\alpha$ = 55° relativ zur Normalen der oberen Oberfläche der Glasscheibe verkippt, wobei die Glasscheibe um die Richtung senkrecht zur Ziehrichtung, somit um die X-Richtung verkippt wurde. Die Verkippungsachse, also die Achse, um die die Scheibe gedreht wird, ist dabei in der Ebene der Glasscheibe senkrecht zur Ziehrichtung, wodurch dann Linsen-Effekte in Ziehrichtung verstärkt werden.

Es ist aus Figur 7 gut zu erkennen, dass die mit den vorliegenden Verfahren hergestellte Glasscheibe 33 nur sehr geringe Brechkräfte im Vergleich zu einer herkömmlichen Glasscheibe aufwies. Hierbei wurden die Brechkräfte der Oberfläche der Oberseite der Glasscheibe addiert zu den Brechkräften der Oberfläche der Unterseite der Glasscheibe jeweils einer herkömmlichen und einer erfindungsgemäß hergestellten Glasscheibe angegeben.

Figur 8 zeigt 99, 9 % Quantile der Summe der oberflächennahen Brechkräfte der Oberseite und der Unterseite einer Glasscheibe innerhalb einer Messfläche Mb, von herkömmlichen und einer mit dem vorliegend offenbarten Verfahren hergestellten Glasscheibe in mdpt als Funktion des Werts der Summe des dekadischen Logarithmus der Viskosität $\eta_A$, somit lg ($\eta_A$ /dPa*s), des jeweiligen Glases bei einer Entfernung zu dem Bauteil zur Durchsatzregulierung, an welcher das Glas nach seinem Auftreffen auf das Floatbad seine maximale Breite erlangt hat und des dekadischen Logarithmus der Viskosität $\eta_E$, somit lg ($\eta_E$ /dPa*s), am Ende des Heißformens bei einem Verkippungswinkel von 55°. Die gemessene Glasscheibe hatte jeweils eine Dicke von 3,8mm und bestand aus Borosilicatglas.

Die erfindungsgemäß hergestellte Glasscheibe wies unter einem Winkel von 55° verkippt Beträge der summierten oberflächennahen Brechkräfte der Oberseite der Glasscheibe mit den oberflächennahen Brechkräften der Unterseite der Glasscheibe von regelmäßig unter 7 mdpt auf, und beispielsweise lagen diese für ein 99,9 % Quantil in einem Bereich von etwa 6mdpt. Hierbei wurde die Messung in Ziehrichtung, somit in Y-Richtung verlaufend an der Oberfläche der Oberseite der Glasscheibe 33 durchgeführt.

Aus diesen Werten ergaben sich mit der vorstehend diskutierten Gleichung 1 für eine nicht verkippte Glasscheibe, somit für senkrecht auf die Glasscheibe auftreffendes Licht, Beträge der summierten oberflächennahen Brechkräfte der Oberseite der Glasscheibe mit den oberflächennahen Brechkräften der Unterseite der Glasscheibe von regelmäßig unter 7 mdpt geteilt durch den vorstehend beschrieben Faktor 4,2, somit Brechkräfte von 0 mdpt bis etwa 1,7 mdpt, exakter berechnet somit von weniger als 1,66 mdpt. Beispielsweise lagen diese Werte der summierten oberflächennahen Brechkräfte der Oberseite und der Unterseite der Glasscheibe für ein 99,9 % Quantil für senkrecht auf die Glasscheibe auftreffendes Licht in einem Bereich von etwa 6 mdpt geteilt durch den vorstehend beschriebenen Faktor 4,2, somit bei weniger als etwa 1,7, exakter berechnet bei unter 1, 66 mdpt. Hierbei wurde das 99,9% Quantil jeweils für die innerhalb der Messfläche Mb erhaltenen gefilterten Werte ermittelt. Die Aussagen bezüglich eines 99,9 % Quantils liegen bezüglich einer Einzelmessung bei anderen Werten als Aussagen bezüglich eines Mittelwerts, insbesondere arithmetischen Mittelwerts, da diese für 99,9 % der erhaltenen Messwerte getroffen werden, wohingegen der arithmetische Mittelwert lediglich die Summe sämtlicher Messwerte geteilt durch deren Anzahl erfasst und folglich bereits prinzipiell keine Aussage treffen kann, welche für 99,9% der Messwerte gilt.

Zusätzlich zu der branchenüblichen Messung mit dem optisch messenden System ISRA VISION LABSCAN-SCREEN 2D, welches mit dem Filter 4/5/0 (WinkelBrechkraft/Differenzierungslänge/) verwendet wurde, und mit welchem gleichzeitig sowohl die Brechkräfte der Oberseite als auch der Unterseite der aus dem Glasband vereinzelten Glasscheibe gemessen wurden, wurden statt der vorstehend erwähnten Filterung mit dem Filter 4/5/0 (Winkel/Brechkraft/Differenzierungslänge/) auch die ungefilterten Rohdaten dieses Messgeräts ausgewertet und diese dabei der nachfolgend beschriebenen Filterung unterworfen.

Bei diesen unter dem Verkippungswinkel von 55° erhaltenen Werte wiesen die einzelnen Messpunkte einen Abstand in Ziehrichtung von jeweils 0,8 mm auf. Um diese Werte auf eine unverkippte Glasscheibe zu übertragen, wurden diese zunächst entsprechend dem Verkippungswinkel $\Phi$ wie folgt für deren in Ziehrichtung, somit in Y-Richtung erhaltenen Werte entsprechend der nachfolgenden Gleichung 2 transformiert:

$$\left( Y_{Scheibe\ unverkippt} = \frac{Y_{Scheie\ verkippt}}{cos(\Phi)} \right)$$

mit $Y_{Scheibe\ unverkippt}$ = Abstand der jeweiligen Messpunkte bei einer unverkippten Glasscheibe
YScheibe verkippt = Abstand der jeweiligen Messpunkte bei der verkippten Glasscheibe
$\Phi$ = Kipp- oder Verkippungswinkel

Bei den transformierten Daten betrug der Abstand für die jeweiligen Messpunkte, somit auf einer unverkippten Scheibe dann 1,4 mm.

Die hierdurch erhaltenen Werte wurden mit einem Butterworth Low-Pass-Filter der Ordnung 18 gefiltert, dessen Filtercharakteristik in Figur 10 dargestellt ist, in Y- oder Ziehrichtung gefiltert. Die Grenzwellenlänge dieses Low-Pass-Filters lag bei 20 mm. Es ist gut aus Figur 10 zu erkennen, dass Signale mit einer Periode oder Wellenlänge in Ziehrichtung von weniger als 15 mm im Wesentlichen vollständig unterdrückt wurden und Signale mit einer Periode oder Wellenlänge in Y-Richtung von mehr als etwa 22 mm im Wesentlichen ungeändert blieben. Für diese Berechnungen wurde das Programm Python SciPy verwendet. Diese Filterung wurde vorgenommen, um eine Unterdrückung von Rauschanteilen sowie von Störeinflüssen, wie beispielsweise eine partikuläre Belegung oder Verschmutzungen auf der Glasscheibe zu vermindern.

Aufgrund der vorstehenden Filterung werden hierbei jedoch keine Werte erhalten und angegeben, wie diese in typischer Weise für Feinwelligkeiten von Oberflächen herkömmlicher Glasscheiben offenbart werden, da diese Messungen der Feinwelligkeit in der Regel und normgemäß innerhalb eines Bereichs mit einer unteren Grenzwellenlänge von λc (Cut-off) = 0,25 mm und einer oberen Grenzwellenlänge von λf (Cut-off) = 8 mm gemessen werden, welche jedoch durch die vorstehend angegebene Filterung im Wesentlichen vollständig unterdrückt werden.

Auch hierbei, somit basierend auf den Rohdaten und der vorstehend beschriebenen Low-Pass-Filterung mittels des Butterworth-Filters, ergaben sich mit der vorstehend diskutierten Gleichung 1 für eine nicht verkippte Glasscheibe, somit für senkrecht auf die Glasscheibe auftreffendes Licht, Beträge der summierten oberflächennahen Brechkräfte der Oberseite der Glasscheibe mit den oberflächennahen Brechkräften der Unterseite der Glasscheibe von regelmäßig unter 7 mdpt, bei manchen Messungen sogar von weniger als 5,7 mdpt, geteilt durch den vorstehend beschrieben Faktor 4,2, somit Brechkräfte von 0 mdpt bis etwa 1,7 mdpt, exakter berechnet somit von weniger als 1,66 mdpt. Beispielsweise lagen diese Werte der summierten oberflächennahen Brechkräfte der Oberseite und der Unterseite der Glasscheibe für ein 99,9 % Quantil für senkrecht auf die Glasscheibe auftreffendes Licht in einem Bereich von etwa 6 mdpt geteilt durch den vorstehend beschriebenen Faktor 4,2, somit bei weniger als etwa 1,7, exakter berechnet bei unter 1, 66 mdpt. Die Erfinder gehen aufgrund messtechnischer Erfahrung mit den vorliegenden Auswertungen davon aus, dass bei den vorstehenden Angaben der Wert von 1,7 mdpt einer maximalen Abweichung von etwa +/- 0,1 mdpt unterliegen kann. Hierbei wurde das 99,9% Quantil jeweils für die innerhalb der Messfläche Mb erhaltenen gefilterten Werte ermittelt. Auch diese Aussagen bezüglich eines 99,9 % Quantils liegen, wie bereits vorstehend erwähnt, bezüglich einer Einzelmessung bei anderen Werten als Aussagen bezüglich eines Mittelwerts, insbesondere arithmetischen Mittelwerts, da diese für 99,9 % der erhaltenen Messwerte getroffen werden, wohingegen der arithmetische Mittelwert lediglich die Summe sämtlicher Messwerte geteilt durch deren Anzahl erfasst und folglich bereits prinzipiell keine Aussage treffen kann, welche für 99,9% der Messwerte gilt.

Bezugszeichenliste

1   Floatanlage
2   Schmelzwanne
3   zu erschmelzendes Gemenge, insbesondere Glasgemenge
4   Brenner
5   Glasschmelze
6   Kanal
7   Floatbad
8   Heißzuformendes Glas
9   Floatbadofen
10   Deckenheizer
11   Lippenstein oder Spout
12   Top-Roller
13   Glasband
14   Kühlofen
15   Decken- und Bodenheizer
16   Einrichtung zum Schmelzen
17   Bauteil zur Durchsatzregulierung, insbesondere Regelschieber oder Tweel
18   Einrichtung zur definierten Einstellung der Viskosität des geschmolzenen und heißzuformenden Glases 8 vor dem Bauteil zur Durchsatzregulierung 17
19   Kammer, welche von der Schmelzwanne 2 abgetrennt ist oder auch einen Teil von dieser bilden kann und das geschmolzenen zu einem Glasband 13 zu formenden Glas 8 zur definierten Einstellung seiner Viskosität aufnimmt
20   Fluiddurchströmter Bereich
21   Fluiddurchströmter Bereich
22   Wand der Kammer 19
23   Wand der Kammer 19
24   Wand der Kammer 19
25   Wand der Kammer 19
26   Sensorische Einrichtung oder Einheit
27   Bay oder Wannenabschnitt 1
28   Bay oder Wannenabschnitt 2
29   Bay oder Wannenabschnitt 3
30   Bay oder Wannenabschnitt 4
31   Bay oder Wannenabschnitt 5
32   Bay oder Wannenabschnitt 6
33   Glasscheibe
34   Oberseite der Glasscheibe 33
35   Unterseite der Glasscheibe 33
36   Oberfläche der Oberseite 34 der Glasscheibe 33
37   Oberfläche der Unterseite 35 der Glasscheibe 33
38   Top-Roller
39   Top-Roller
40   Top-Roller
41   Top-Roller
42   Top-Roller
43   Top-Roller
44   Top-Roller
45   Wand des Kanals 6
46   Wand des Kanals 6
47   Einrichtung oder Vorrichtung zur Heißformung

48  Obere Oberfläche, obere Hauptoberfläche des heißzuformenden Glases 8 oder Glasbands 13

49  Untere Oberfläche, untere Hauptoberfläche des heißzuformenden Glases 8 oder Glasbands 13

50  Symmetrieachse

51  Symmetrieachse

52  Lot in negativer z-Richtung

53  Lot in negativer z-Richtung

54  Ort des Eintritts des Glases 8 in den Abschnitt Hs zur dickenbezogenen Heißformung, mit einer gestrichelten Linie dargestellt

55  Ort des Austritts des Glases 8 aus dem Abschnitt Hs zur Heißformung

56  Entfernung zu dem Bauteil zur Durchsatzregulierung, an welcher das Glas nach seinem Auftreffen auf das Floatbad seine maximale Breite erlangt hat

57  weitere Kühleinrichtung

Mb  Fläche oder Messfläche zur Bestimmung von Brechkräften, insbesondere oberflächennahen Brechkräften

Mi  Mitte des Glasbands in X-Richtung

$\eta$  Viskosität

$\eta_A$  Viskosität bei einer Entfernung zu dem Bauteil zur Durchsatzregulierung, an welcher das Glas nach seinem Auftreffen auf das Floatbads seine maximale Breite erlangt hat

$\eta_E$  Viskosität am Ende des Heißformens

**Patentansprüche**

1. Glasscheibe, insbesondere aus einem mittels Heißformung geformten, vorzugsweise gefloatetem Glasband durch Vereinzelung erhaltene Glasscheibe, insbesondere umfassend ein Borosilikatglas, mit einer Dicke D zwischen mindestens 1,75 mm und höchstens 7 mm, umfassend eine Oberseite und eine Unterseite, **gekennzeichnet durch** einen Betrag der Summe der Brechkräfte der Oberseite und der Unterseite innerhalb einer quadratischen Fläche Mb von 500 mm mal 500 mm für senkrecht auf die Glasscheibe auftreffendes Licht für ein 99,9% Quantil von 0 mdpt bis weniger als 1,7 mdpt in zumindest einer Richtung parallel zu der Oberfläche der Glasscheibe.

2. Glasscheibe nach Anspruch 1, wobei die Brechkräfte auf der Oberfläche der Oberseite und der Oberfläche der Unterseite der Glasscheibe gemessen sind, somit auf der Oberfläche der in einem Floatverfahren während der Heißformung dem Zinnbad abgewandten Seite und der Oberfläche der dem Zinnbad zugewandten Seite der Glasscheibe gemessen sind.

3. Glasscheibe nach einem der vorstehenden Ansprüche, bei welcher die zumindest eine Richtung der bei der Heißformung der Glasscheibe verwendeten Ziehrichtung entspricht.

4. Glasscheibe nach einem der vorstehenden Ansprüche, umfassend ein Borosilikatglas umfassend die folgenden Komponenten in Gew.-%:

| | |
|---|---|
| $SiO_2$ | 70 bis 87, bevorzugt 75 bis 85 |
| $B_2O_3$ | 5 bis 25, bevorzugt 7 bis 14 |
| $Al_2O_3$ | 0 bis 5, bevorzugt 1 bis 4 |
| $Na_2O$ | 0,5 bis 9, bevorzugt 0,5 bis 6,5 |
| $K_2O$ | 0 bis 3, bevorzugt 0,3 bis 2,5, besonders bevorzugt bis 2 |
| CaO | 0 bis 3 |
| MgO | 0 bis 2. |

5. Glasscheibe nach einem der vorstehenden Ansprüche, wobei die Glasscheibe eine Floatglasscheibe ist.

6. Verfahren zur Herstellung einer Glasscheibe, insbesondere zur kontinuierlichen Herstellung einer Glasscheibe, insbesondere einer Glasscheibe nach einem der vorstehenden Ansprüche, umfassend die Schritte

- Bereitstellen eines Gemenges umfassend Glasrohstoffe,
- Schmelzen des Gemenges unter Erhalt einer Glasschmelze,
- Einstellen der Viskosität der Glasschmelze,
- Überführen der Glasschmelze in eine Vorrichtung zum Heißformen, insbesondere mittels Floaten unter Bildung eines Glasbandes,
- Vereinzeln des heißgeformten Glasbandes unter Erhalt einer Glasscheibe,

wobei die Viskosität in der Vorrichtung zum Heißformen so eingestellt ist, dass die Summe der dekadischen Logarithmen der Viskosität bei der Entfernung von einem Bauteil zur Durchsatzregulierung, an welcher das Glas nach seinem Auftreffen auf das Floatbad seine maximale Breite erlangt hat lg ($\eta_A$ /dPa*s), und der Viskosität am Ende des Heißformens lg ($\eta_E$ /dPa*s) zwischen mindestens 11,4 und höchstens 11,8 liegt.

7. Verfahren zur Herstellung einer Glasscheibe, insbesondere zur kontinuierlichen Herstellung einer Glasscheibe, insbesondere einer Glasscheibe nach einem der vorstehenden Ansprüche von 1 bis 5, insbesondere mit den Merkmalen des Verfahrens nach Anspruch 6, wobei der dekadische Logarithmus der Viskosität bei der Entfernung von einem Bauteil zur Durchsatzregulierung, an welcher das Glas nach seinem Auftreffen auf das Floatbad seine maximale Breite erlangt hat lg ($\eta_A$ /dPa*s), insbesondere bei einer Entfernung von etwa 1,5 m in Ziehrichtung nach einem Bauteil zur Durchsatzregulierung, insbesondere am Anfang eines zweiten Floatbadabschnitts, mindestens 5,0, besonders bevorzugt mindestens 5,1, und weniger als 5,25, beträgt und der dekadische Logarithmus zum Ende des Heißformens lg ($\eta_E$ /dPa*s), insbesondere bei einer Entfernung in Ziehrichtung von etwa 10,5 m bis 11,1 m nach dem Bauteil zur Durchsatzregulierung, insbesondere am Anfang eines vierten Floatbadabschnitts, wenigstens 6,2, vorzugsweise mindestens 6,3, besonders bevorzugt mindestens 6,35 beträgt, wobei eine bevorzugte Obergrenze höchstens 6,5 ist.

8. Verfahren nach Anspruch 6 oder 7, bei welchem das Heißformen mittels Floaten erfolgt.

9. Verfahren nach einem der Ansprüche 6 bis 8, bei welchem die zumindest eine Richtung auf der Glasscheibe oder einer Verpackung der Glasscheibe angegeben wird.

10. Glasscheibe nach einem der Ansprüche von 1 bis 5, vorzugsweise hergestellt oder herstellbar mit einem Verfahren nach einem der Ansprüche von 8 bis 9.

11. Verwendung einer Glasscheibe nach einem der Ansprüche 1 bis 5 oder nach Anspruch 10 in elektronischen Geräten, insbesondere als Abdeckscheibe einer Display- oder Anzeigeeinrichtung.

12. Verwendung einer Glasscheibe nach einem der Ansprüche 1 bis 5 oder nach Anspruch 10 als Verglasung, insbesondere als Architekturverglasung von Gebäuden.

Strömungs- oder Ziehrichtung

Fig. 1

EP 4 345 071 A1

Fig. 2

Strömungs- oder Ziehrichtung

EP 4 345 071 A1

19

Fig. 3

Fig. 4

Fig. 5

EP 4 345 071 A1

Fig. 6

EP 4 345 071 A1

(Stand der Technik)
Fig. 7 a

(Erfindungsgemäß)
Fig. 7 b

Fig. 8

Verstärkung optischer Effekte, insbesondere optischer Brechkräfte durch Verkippen

Fig. 9

Filterantwort (Verstärkungsfaktor) des Butterworth-Low-Pass-Filters achtzehnter Ordnung

Fig. 10

# EP 4 345 071 A1

Europäisches
Patentamt

European
Patent Office

Office européen
des brevets

# EUROPÄISCHER RECHERCHENBERICHT

**Nummer der Anmeldung**

**EP 23 19 9993**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2009 107913 A (CENTRAL GLASS CO LTD) 21. Mai 2009 (2009-05-21) | 1-3, 10-12 | INV. C03B18/02 C03C3/091 |
| Y | * Absatz [0047]; Anspruch 1 * ----- | 4,5 | |
| X | WO 2009/054411 A1 (ASAHI GLASS CO LTD [JP]; TAKIGUCHI TETSUSHI [JP] ET AL.) 30. April 2009 (2009-04-30) * Anspruch 4 * ----- | 6-9 | |
| Y | DE 10 2020 104973 A1 (SCHOTT AG [DE]) 10. September 2020 (2020-09-10) * Ansprüche 6, 13 * ----- | 4,5 | |

**RECHERCHIERTE SACHGEBIETE (IPC)**

C03B
C03C

Der vorliegende Recherchenbericht wurde für alle Patentansprüche erstellt

| Recherchenort | Abschlußdatum der Recherche | Prüfer |
|---|---|---|
| Den Haag | 23. Januar 2024 | Flügel, Alexander |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 19 9993

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-01-2024

| Im Recherchenbericht angeführtes Patentdokument | Datum der Veröffentlichung | Mitglied(er) der Patentfamilie | Datum der Veröffentlichung |
|---|---|---|---|
| JP 2009107913 A | 21-05-2009 | KEINE | |
| WO 2009054411 A1 | 30-04-2009 | CN 101848874 A | 29-09-2010 |
| | | JP 5418228 B2 | 19-02-2014 |
| | | JP WO2009054411 A1 | 03-03-2011 |
| | | KR 20100091949 A | 19-08-2010 |
| | | TW 200930670 A | 16-07-2009 |
| | | WO 2009054411 A1 | 30-04-2009 |
| DE 102020104973 A1 | 10-09-2020 | CN 111646677 A | 11-09-2020 |
| | | DE 102020104973 A1 | 10-09-2020 |
| | | US 2020354253 A1 | 12-11-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102007025687 B3
- WO 2018114956 A1
- WO 2019076492 A1
- DE 102020104973 A1
- DE 102013203624 A1